# EUROPEAN PATENT APPLICATION

(11) **EP 4 761 332 A1**
(43) Date of publication of application: **17.06.2026**
(21) Application number: 23948114.6
(22) Date of filing: 10.08.2023
(51) Int. Cl.: H04W 24/06

(54) **WIRELESS COMMUNICATION METHOD, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); WU, Hao, Dongguan, Guangdong 523860 (CN)
(74) Representative: Grassi, Stefano
(86) International application number: PCT/CN2023/112385
(87) International publication number: WO 2025/030544

(57) **Abstract**

Provided are a wireless communication method, and a communication device. The method comprises: a first device receives first information sent by a second device, wherein the first information is used for performing performance testing and/or performance evaluation on a first model, which has not been activated and used, in the first device. In embodiments of the present application, a method (comprising performance testing and/or performance evaluation) for testing the first model is provided, wherein the first model may be understood as a model that has not been activated and used, or the first model is a model that needs to be tested (comprising performance testing and/or performance evaluation) but has not been formally used. That is to say, in the embodiments of the present application, the first model which has not been activated and used can be tested in advance, and compared with a conventional solution that only the model that has been activated and used (or formally used) can be monitored, the present application facilitates decrease of the probability of communication quality reduction caused by blind activation of an unsuitable model.

## Description

### TECHNICAL FIELD

The disclosure relates to the technical field of communications, and more particularly, to a method for wireless communication and a communication device.

### BACKGROUND

A current process for model monitoring mainly monitors model(s) activated for use. However, the mechanism of monitoring the model activated for use will directly lead to real-time degradation of user communication performance once the model activated for use has poor performance. For example, the first device may activate and use a model that is not suitable originally, and it is discovered after a period of model monitoring that the activated and used model is not suitable, resulting in a low communication quality based on the model during the period of monitoring the model, for example, the throughput based on the model during the period of monitoring the model decreases, or the bit error rate of data received or transmitted based on the model during the period of monitoring the model increases.

### SUMMARY

The disclosure provides a method for wireless communication and a communication device. Various aspects of the disclosure are described as follows.

In a first aspect, there is provided a method for wireless communication, including: a first device receives first information sent by a second device, the first information being used for performing performance testing and/or performance evaluation on a first model not activated for use in the first device.

In a second aspect, there is provided a method for wireless communication, including: a second device sends first information to a first device, the first information being used for performing performance testing and/or performance evaluation on a first model not activated for use by the first device.

In a third aspect, there is provided a communication device, including: a receiving unit, configured to receive first information sent by a second device, the first information being used for performing performance testing and/or performance evaluation on a first model not activated for use in the first device.

In a fourth aspect, there is provided a communication device, including: a sending unit, configured to send first information to a first device, the first information being used for performing performance testing and/or performance evaluation on a first model not activated for use by the first device.

In a fifth aspect, there is provided a communication device, including a processor, a memory and a communication interface. The memory is configured to store one or more computer programs, and the processor is configured to invoke the computer programs in the memory to cause the terminal device to perform some or all of operations in the methods of the above aspects.

In a sixth aspect, the embodiments of the disclosure provide a communication system including the first device and/or the second device above. In another possible design, the system may further include other devices that interact with the first device and/or the second device in the schemes provided by the embodiments of the disclosure.

In a seventh aspect, the embodiments of the disclosure provide a computer-readable storage medium storing a computer program that causes a communication device (e.g., a first device or a second device) to perform some or all of the operations in the methods of the above aspects.

In an eighth aspect, the embodiments of the disclosure provide a computer program product, herein the computer program product includes a non-transitory computer-readable storage medium storing a computer program operable to cause a communication device (e.g., a first device or a second device) to perform some or all of the operations in the methods of the above aspects. In some implementations, the computer program product may be a software installation package.

In a ninth aspect, the embodiments of the disclosure provide a chip including a memory and a processor, and the processor can invoke and run a computer program from the memory to perform some or all of the operations described in the methods of the above aspects.

In the embodiments of the disclosure, a manner of testing a first model (including performance testing and/or performance evaluation) is provided, where the first model can be understood as a model that is not activated for use, or the first model is a model that needs to be tested (including performance testing and/or performance evaluation) and has not been used formally. That is to say, in the embodiments of the disclosure, the first model not activated for use can be tested in advance, which helps to reduce the probability of degradation of communication quality caused by blindly activating an inapplicable model, as compared with the traditional scheme in which only the model that is activated for use (or formally used) can be monitored.

### BRIEF DESCRIPTION OF THE DRAWINGS

FIG. 1 shows a wireless communication system 100 to which an embodiment of the disclosure is applied.
FIG. 2 is a schematic flowchart of a method for wireless communication according to an embodiment of the disclosure.
FIG. 3 is a schematic diagram of a communication device according to an embodiment of the disclosure.
FIG. 4 is a schematic diagram of a communication device according to another embodiment of the disclosure.
FIG. 5 is a schematic structural diagram of a communication device according to an embodiment of the disclosure.

### DETAILED DESCRIPTION

Hereinafter, technical solutions in the disclosure will be described with reference to the accompanying drawings.

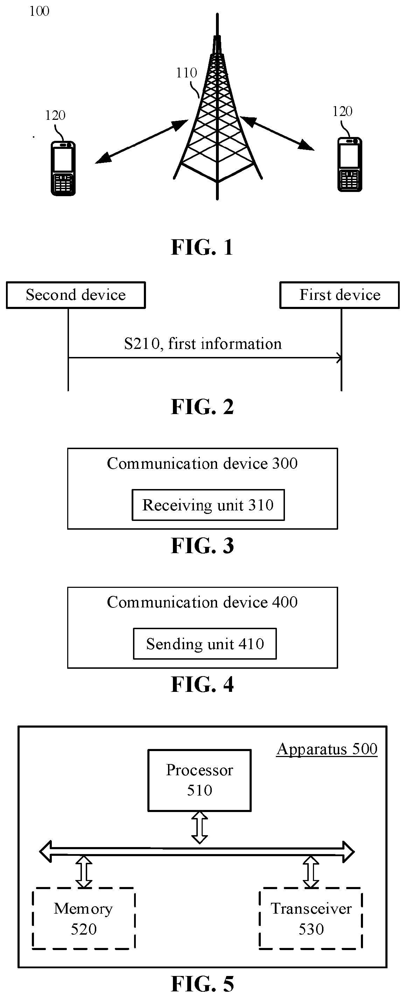

FIG. 1 shows a wireless communication system 100 to which an embodiment of the disclosure is applied. The wireless communication system 100 may include a network device 110 and a terminal device 120. The network device 110 may be a device in communication with the terminal device 120. The network device 110 may provide communication coverage for a particular geographic area and may communicate with the terminal device 120 located within the coverage area.

In some implementations, the terminal devices 120 may directly communicate with each other, and a link for communication may be referred to as a sidelink.

FIG. 1 exemplarily illustrates one network device and two terminals. Alternatively, the wireless communication system 100 may include a plurality of network devices and another number of terminal devices may be included within the coverage range of each network device. The embodiments of the disclosure are not limited thereto.

Optionally, the wireless communication system 100 may further include other network entities such as a network controller and a mobility management entity. No limitations are imposed in this regard in the embodiments of the disclosure.

It should be understood that the technical solutions of the embodiments of the disclosure can be applied to various communication systems, such as a Fifth Generation (5G) system or a New Radio (NR) system, a Long Term Evolution (LTE) system, an LTE Frequency Division Duplex (FDD) system, an LTE Time Division Duplex (TDD), and the like. The technical solutions provided in the disclosure can also be applied to future communication systems, such as a sixth generation mobile communication system, a satellite communication system, and the like.

The terminal device in the embodiment of the disclosure may also be referred to as User Equipment (UE), an access terminal, a subscriber unit, a subscriber station, a Mobile Station (MS), a Mobile Terminal (MT), a remote station, a remote terminal, a mobile device, a user terminal, a terminal, a wireless communication device, a user agent, or a user device. The terminal device in the embodiment of the disclosure may be a device that provides voice and/or data connectivity to a user, and may be used to connect people, objects, and machines, for example, a handheld device or vehicle-mounted device that has a wireless connection function, or the like. The terminal device in the embodiment of the disclosure may be a mobile phone, a tablet computer (or Pad), a laptop, a handheld computer, a Mobile Internet Device (MID), a wearable device, a Virtual Reality (VR) device, an Augmented Reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Alternatively, the UE may be used to act as a base station. For example, a UE may act as a scheduling entity that provides sidelink signals between UEs in Vehicle-to-Everything (V2X) or Device-to-Device (D2D) communication, etc. For example, a cellular phone and an automobile communicate with each other using sidelink signals. A cellular phone and a smart home device communicate with each other without communication signals relayed through a base station.

The network device in the embodiments of the disclosure may be a device for communicating with a terminal device, and the network device may also be referred to as an access network device or a radio access network device, for example, the network device may be a base station. The network device in the embodiments of the disclosure may refer to a radio access network (RAN) node (or device) that connects the terminal device to a wireless network. The base station may broadly cover, or be substituted by, various names such as a Node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a Multi-Standard Radio (MSR) node, a home base station, a network controller, an access node, a wireless node, an Access Point (AP), a transmission node, a transceiver node, a Base Band Unit (BBU), a Remote Radio Unit (RRU), an Active Antenna Unit (AAU), a Remote Radio Head (RRH), a Central Unit (CU), a Distributed Unit (DU), and a positioning node. The base station may be a macro base station, a micro base station, a relay node, a donor node, or the like, or a combination thereof. The base station may also refer to a communication module, modem, or chip arranged within the aforementioned apparatus or device. The base station may be a mobile switching center, a device that assumes the function of a base station in Device-to-Device (D2D), V2X, or Machine-to-Machine (M2M) communication, a network-side device in a 6G network, a device that assumes the function of a base station in a future communication system, or the like. The base stations may support networks of the same or different access technologies. The embodiments of the disclosure do not limit the specific technology and the specific form of devices adopted by the network device.

The base station may be fixed or mobile. For example, a helicopter or drone may be configured to act as a mobile base station, and one or more cells may move according to the location of the mobile base station. In other examples, a helicopter or drone may be configured as a device to communicate with another base station.

In some deployments, the network device in the embodiments of the disclosure may refer to a CU or a DU, or the network device includes a CU and a DU. The gNB may also include an AAU.

The network device and the terminal device can be deployed on land, including indoor or outdoor environments, handheld or vehicle-mounted; they can also be deployed on the water; and they can also be deployed on aircrafts, balloons and satellites in the air. The scenario in which the network device and the terminal device are located is not limited in the embodiments of the disclosure.

It should be understood that all or part of the functionality of the communication device in the disclosure may also be implemented by software functions running on hardware, or by virtualized functions instantiated on a platform, such as a cloud platform.

### Model monitoring process

With the development of technology, models have been introduced in communication systems. For example, a signal is encoded and/or decoded based on the model. For another example, beam selection is performed based on the model. For another example, data adjustment and/or demodulation is performed based on the model. However, due to changes in environment, configuration and other factors, the model may not operate well, resulting in the inability to communicate based on the model. At present, in order to monitor an operating status of the model and avoid the problem of communication failure or performance degradation due to the failure of the model to operate well, a model monitoring process is introduced. In the process of model monitoring, whether the model can operate well or not can be monitored, and a monitoring result of the model can be sent to a decision-maker, so that the decision-maker can make management judgment based on the monitoring result of the model.

Based on the model monitoring process introduced above, it can be seen that the current model monitoring process mainly monitors activated and used models. However, the mechanism of monitoring the model activated for use will directly lead to real-time degradation of user communication performance once the model activated for use has poor performance. For example, the first device may activate and use a model that is not suitable originally, and it is discovered after a period of model monitoring that the activated and used model is not suitable, resulting in a low communication quality based on the model during the period of monitoring the model, for example, the throughput based on the model during the period of monitoring the model decreases, or the bit error rate of data received or transmitted based on the model during the period of monitoring the model increases.

Therefore, in view of the problem above, the embodiments of the disclosure provide a manner of testing a first model (including performance testing and/or performance evaluation), where the first model can be understood as a model that is not activated for use, or the first model is a model that needs to be tested (including performance testing and/or performance evaluation) and has not been used formally. That is to say, in the embodiments of the disclosure, the first model not activated for use can be tested in advance, which helps to reduce the probability of degradation of communication quality caused by blindly activating an inapplicable model, as compared with the traditional scheme in which only the model that is activated for use (or formally used) can be monitored.

On the other hand, in the embodiment of the disclosure, the first model that is not activated for use can be tested in advance, which helps to avoid the risk of system performance uncertainty caused by the direct formal operation of the first model (the so-called formal operation of the model can be understood as operating by replacing the corresponding non-AI algorithm with an artificial intelligence (AI) model), so as to improve the robustness of the system operation after the first model is introduced into the communication system.

It is to be noted that the embodiments of the disclosure do not impose any limitations on the first model. In some implementations, the first model may be an AI model. For example, the first model may be a model built based on a Convolutional Neural Network (CNN) architecture. For another example, the first model may be a model built based on a Recurrent Neural Network (RNN) architecture. In other implementations, the first model may be a Machine Learning (ML) model.

In some implementations, the testing of the first model may be performed based on first information. In order to facilitate understanding, the method for wireless communication according to an embodiment of the disclosure will be described below with reference to FIG. 2. The method shown in FIG. 2 includes an operation S210.

In the operation S210, a second device sends first information to a first device, where the first information is used for performing performance testing and/or performance evaluation on a first model not activated for use by the first device.

It is to be noted that for convenience of description, the above-described performing performance testing and/or performance evaluation on the first model is collectively referred to as testing the first model. In some implementations, the process of testing the first model may include one or more processes of inference using the first model. Accordingly, testing result(s) obtained by testing the first model may be determined based on inference result(s) obtained by performing inference using the first model one or more times. For example, the testing result(s) obtained by testing the first model may include the inference result(s) obtained by performing inference using the first model one or more times. For another example, the testing result(s) obtained by testing the first model may be acquired through statistical processing based on the inference result(s) obtained by performing inference using the first model one or more times. The embodiments of the disclosure are not limited thereto.

In addition, taking the first model being an AI model as an example, the AI model can replace algorithm(s) of a traditional non-AI model to solve the communication problem. In the field of communications, an AI model can replace a single communication module or group of communication modules composed of non-AI algorithms. Since functions of the algorithms of the AI model and the traditional non-AI model are similar or identical, the traditional non-AI communication algorithm is usually deactivated (or disabled) when the AI model is formally running. In an embodiment of the disclosure, the first model is different from the aforementioned AI model formally activated (or activated for use), and although it is necessary to activate the first model when testing the first model, it is not necessary to deactivate the corresponding non-AI algorithm. That is to say, the testing of the first model will not affect operating of the traditional algorithm, and the testing process of the first model operates independently of the corresponding traditional algorithm. At this time, although the first model is activated for testing, it belongs to an informally used model. Accordingly, in some implementations, the first device does not deactivate the traditional non-AI communication algorithm after receiving the first information, and the testing process of the first model associated with the first information operates independently of the corresponding traditional algorithm.

In some implementations, the first information includes one or more of: an identifier of the first model, a first parameter, a second parameter, a third parameter, and a fourth parameter.

**The first information including the identifier of the first model is taken as an example.** Herein, the identifier of the first model may be understood as an identifier associated with the first model that requires performance testing and has not been used formally.

The first information may include identifiers of one or more models. If the first information includes identifiers of a plurality of models, the models indicated by the identifiers of the plurality of models are all models that need to be tested, that is, the models indicated by the identifiers of the plurality of models are all models that are not activated for use, or the models indicated by the identifiers of the plurality of models are all models that need to be tested (including performance testing and/or performance evaluation) and have not bee used formally. Herein, the identifiers of the plurality of models may include the identifier of the first model.

**The first information including the first parameter is taken as an example.** Herein, the first parameter is used to determine an activation time of the first model. In some implementations, the first parameter is used to configure first time delay information, wherein the first device activates the first model after a duration corresponding to the first time delay information has elapsed from a time when the first information is received, or the first delay information is used to indicate a time delay between the time when the first information is received and a time when the first model is activated, or the first delay information is used to indicate a time offset between the time when the first information is received and the time when the first model is activated.

In other implementations, the first parameter is used to configure information about an absolute time when the first model is activated. In the embodiment of the disclosure, the manner by which the information about the absolute time is represented is not limited. For example, the information about the absolute time may be represented by the Coordinated Universal Time (UTC) time. For another example, the information of the absolute time may be represented by system frame information, where the system frame information includes one or more of a hyper frame number, a frame number, a subframe number, a slot number, and a symbol number.

Generally, although the first device knows, after receiving the first information, that the second device wants to have the first model tested, it takes some time for the first device to prepare for testing the first model, for example, it takes time for the first device to decode the first information, for another example, it takes time for the first device to apply configuration required for testing the first model, for another example, it takes time for the first device to load algorithms of the first model, for another example, it takes time for the first device to load the hardware matching the algorithms of the first model, and for another example, it takes time for the first device to load software resources matching the first model. Therefore, in order to reserve preparation time for the first device to test the first model, in the embodiment of the disclosure, the activation time of the first model can be controlled by the first parameter, which helps to avoid waste of system resources caused by the second device starting to schedule some resources before the preparation for testing the first model is ready.

For example, if the first parameter is not introduced, the second device may have sent a reference signal for model testing to the first device before the preparation for testing the first model is ready, and at this time, the first device cannot test the first model based on the reference signal because the preparation is not ready. On the contrary, if the first parameter is introduced, the second device may send the model test reference signal after the time corresponding to the first parameter has elapsed from the time when the first information is sent, and at this time, the first device is also ready to test the first model, and the first device may test the first model based on the reference signal, which helps to avoid the waste of system resources caused by the second device starting to schedule some resources before the preparation for testing the first model is ready.

Based on the above description of the first parameter, in the embodiment of the disclosure, the first parameter may be related to the capability of the first device, or the first parameter may be determined based on the capability of the first device. For example, for a first device having a higher capability, the activation time of the first model determined by the first parameter may be earlier (e.g., the duration corresponding to the first parameter may be shorter). For another example, for a first device having a lower capability, the activation time of the first model determined by the first parameter may be later (e.g., the duration corresponding to the first parameter may be longer).

It is to be noted that the first parameter has an association relationship with the identifier of the model in the first information. In some implementations, the association relationship between the first parameter and the identifier of the model in the first information may be a one-to-one association relationship, where the one-to-one association relationship may be understood as an association between one first parameter and the identifier of one model. In other implementations, the association relationship between the first parameter and the identifier of the model in the first information may be a one-to-many association relationship, which helps to reduce the resources required for transmitting the first information. Herein, the one-to-many association relationship may be understood as an association between one first parameter and identifiers of a group of models, or the one-to-many association relationship may be understood as an association between one first parameter and identifiers of a plurality of models, or the one-to-many association relationship may be understood as an association between one first parameter and identifiers of all models in the first information.

Accordingly, in some implementations, the models associated with the first parameter need to be activated according to activation times determined based on the first parameter. Taking the first parameter being associated with the first model as an example, the activation time of the first model is determined based on the first parameter.

The embodiment of the disclosure does not impose any limitations on the manner for acquiring the first parameter. In some implementations, the first parameter may be carried in the first information and indicated by the second device to the first device, which helps to improve the flexibility of the configuration of the first parameter. In other implementations, the first parameter may be set in a predefined manner. For example, the first parameter can be explicitly set to a default value in a protocol, which helps to reduce the overheads required for transmitting the first information.

It should be emphasized that the manners for acquiring the first parameter can be used in combination with each other, for example, the first information includes identifiers of a plurality of models. In this case, first parameter(s) associated with some of the plurality of models can be carried in the first information, and first parameter(s) associated with other models of the plurality can be set in a predefined manner. In this way, it is helpful to improve the flexibility of configuring the first parameters while reducing the overheads required for transmitting the first information.

**The first information including the second parameter is taken as an example.** Herein, the second parameter is used to determine whether an inference result of the first model meets an accuracy requirement. Or in other words, the second parameter is used to determine whether a difference between the inference result of the first model and an actual result meets the accuracy requirement. In some implementations, the second parameter includes an accuracy threshold, where the accuracy threshold is used to determine whether the difference between the inference result of the first model and the corresponding actual result meets the accuracy requirement, or the accuracy threshold is used to determine whether a difference between a single-time inference result of the first model and the corresponding actual result meets the accuracy requirement.

In the embodiment of the disclosure, by introducing the second parameter, it is helpful for the first device to independently determine whether the single-time inference result of the first model meets the accuracy requirement, and then, the first device can perform direct statistics on the model inference results based on whether the single-time inference results of the first model meet the accuracy requirement.

In some implementations, if an absolute value of a result difference between the inference result of the first model and an actual result is less than or equal to the accuracy threshold, the inference result of the first model is considered to meet the accuracy requirement. In other implementations, if an absolute value of a result difference between the inference result of the first model and an actual result is less than or equal to the accuracy threshold, the inference result of the first model is considered to not meet the accuracy requirement.

It is to be noted that the second parameter has a correlation relationship with the identifier of the model in the first information. In some implementations, the association relationship between the second parameter and the identifier of the model in the first information may be a one-to-one association relationship, where the one-to-one association relationship may be understood as an association between one second parameter and the identifier of one model. In other implementations, the association relationship between the second parameter and the identifier of the model in the first information may be a one-to-many association relationship, which helps to reduce the resources required for transmitting the first information. Herein, the one-to-many association relationship may be understood as an association between one second parameter and identifiers of a group of models, or the one-to-many association relationship may be understood as an association between one second parameter and identifiers of a plurality of models, or the one-to-many association relationship may be understood as an association between one second parameter and identifiers of all models in the first information.

The embodiment of the disclosure does not impose any limitations on the actual result mentioned above or below. In some implementations, the actual result may include any one of actual observation result, actual measurement result, and actual calculation result.

**The first information including the third parameter is taken as an example.** Herein the third parameter is used to configure a reference signal for testing the first model, or the third parameter is used to configure a reference signal resource related to testing of the first model, and thus the third parameter may also be referred to as a reference signal resource configuration. In some implementations, the third parameter may be used to configure one or more of: time domain resources, code domain resources, spatial domain resources, and frequency domain resources of the reference signal.

In some implementations, a function of the first model is associated with a type of the reference signal for testing the first model. For example, if the first model is used for Channel State Information (CSI) compression feedback, the reference signal for testing the first model is a Channel State Information Reference Signal (CSI-RS). For another example, if the first model is used for CSI time domain prediction, the reference signal for testing the first model is a CSI-RS. For another example, if the first model is used for beam spatial prediction, the reference signal for testing the first model includes a Synchronization Signal/Physical Broadcast Channel block (SSB) or a CSI-RS. For another example, if the first model is used for beam time domain prediction, the reference signal for testing the first model includes an SSB or a CSI-RS. For another example, if the first model is used for positioning, the reference signal for testing the first model includes a Positioning Reference Signal (PRS).

In some scenarios, if the reference signal resource configured for the traditional algorithm can be used for testing the first model, in this case, the first information may not carry the third parameter. In this way, it is helpful to to reduce transmission resources required for transmitting the first information. In other scenarios, if the first information is defined to include the third parameter, but the third parameter is not configured or does not appear in the first information in a certain configuration process, the first device may test the first model by default using the reference signal resource configured for the traditional algorithm.

It is to be noted that the third parameter has a correlation relationship with the identifier of the model in the first information. In some implementations, the association relationship between the third parameter and the identifier of the model in the first information may be a one-to-one association relationship, where the one-to-one association relationship may be understood as an association between one third parameter and the identifier of one model. In other implementations, the association relationship between the third parameter and the identifier of the model in the first information may be a one-to-many association relationship, which helps to reduce the resources required for transmitting the first information. Herein, the one-to-many association relationship may be understood as an association between one third parameter and identifiers of a group of models, or the one-to-many association relationship may be understood as an association between one third parameter and identifiers of a plurality of models, or the one-to-many association relationship may be understood as an association between one third parameter and identifiers of all models in the first information.

**The first information including the fourth parameter is taken as an example.** Herein, the fourth parameter is associated with a testing process of the first model. The fourth parameter in the embodiments of the disclosure will be described below based on examples 1 to 4.

In the **example 1,** the fourth parameter is used to configure running during information of a first timer. Herein, the first timer is associated with an inference result of the first model.

It is to be noted that the duration information of the first timer has an association relationship with the identifier of the model in the first information. In some implementations, the association relationship between the duration information of the first timer and the identifier of the model in the first information may be a one-to-one association relationship, where the one-to-one association relationship may be understood as an association between the duration information of one first timer and the identifier of one model. In other implementations, the association relationship between the duration information of the first timer and the identifier of the model in the first information may be a one-to-many association relationship, which helps to reduce the resources required for transmitting the first information. Herein, the one-to-many association relationship may be understood as an association between duration information of one first timer and identifiers of a group of models, or the one-to-many association relationship may be understood as an association between duration information of one first timer and identifiers of a plurality of models, or the one-to-many association relationship may be understood as an association between duration information of one first timer and identifiers of all models in the first information.

Further, in the embodiments of the disclosure, regardless of whether the association relationship is a one-to-one association relationship or a one-to-many association relationship, the model(s) indicated by the identifier(s) of the model(s) in the first information may be associated with one first timer, respectively.

In the embodiment of the disclosure, there are various implementations of the starting condition and/or the stopping condition of the first timer. Hereinafter, description will be made respectively based on implementations 1 and 2 of the starting condition and implementations 1 and 2 of the stopping condition.

In the implementation 1 of the starting condition, the starting condition of the first timer includes that the inference result of the first model does not meet the accuracy requirement, or in other words, the starting condition of the first timer includes that a single-time inference result of the first model does not meet the accuracy requirement.

Of course, in the embodiment of the disclosure, the starting condition may include other condition(s), for example, the starting condition includes that the first timer is in a stop state. That is, the starting condition may include: the first timer is in the stop state, and the inference result of the first model does not meet the accuracy requirement. For example, the starting condition of the first timer includes: an absolute value of a difference between a single-time inference result of the first model and a corresponding actual result is greater than an accuracy threshold, and the first timer is in the stop state.

Based on the above description of the implementation 1 of the starting condition, it can be seen that in the embodiment of the disclosure, if the first timer is in the stop state and a certain inference result of the first model meets the accuracy requirement, the first timer is not started (that is, the first timer continues to be in the stop state).

In the implementation 2 of the starting condition, the starting condition of the first timer includes that M consecutive inference results of the first model do not meet the accuracy requirement, where M is a positive integer greater than or equal to 1. If M is a positive integer greater than 1, the starting condition of the first timer can be replaced by the fact that multiple consecutive inference results of the first model do not meet the accuracy requirement.

Of course, in the embodiment of the disclosure, the starting condition may include other condition(s), for example, the starting condition includes that the first timer is in a stop state. That is, the starting condition may include: the first timer is in the stop state, and the M consecutive inference results of the first model do not meet the accuracy requirement. For example, the starting condition of the first timer includes: absolute values of differences between the M consecutive inference results of the first model and respective actual results are greater than an accuracy threshold, and the first timer is in the stop state.

It is to be noted that in an implementation, the fact that the absolute values of the differences between the M consecutive inference results of the first model and the respective actual results are greater than the accuracy threshold can be understood as: an absolute value of a difference between each of the M consecutive inference results of the first model and a corresponding actual result is greater than the accuracy threshold. For example, when the value of M is 2, the fact that the absolute values of the differences between the M consecutive inference results of the first model and the respective actual result are greater than the accuracy threshold may include that an absolute value of a difference between a first inference result of the first model and an actual result corresponding to the first inference result is greater than the accuracy threshold, and an absolute value of a difference between a second inference result of the first model and an actual result corresponding to the second inference result is greater than the accuracy threshold. In another implementation, in the embodiment of the disclosure, the fact that the absolute values of the differences between the M consecutive inference results of the first model and the respective actual results are greater than the accuracy threshold can be understood as: an absolute value of a difference between an average value of the M consecutive inference results of the first model and a latest obtained actual result or an average value of M actual results obtained is greater than the accuracy threshold. For example, when the value of M is 2, the fact that the absolute value of the difference between the average value of the M consecutive inference results of the first model and the latest obtained actual result or the average value of M actual results obtained is greater than the accuracy threshold may include that an absolute value of a difference between an average value of a first inference result and a second inference result of the first model and a second actual result obtained or an average value of two actual results obtained is greater than the accuracy threshold.

In addition, based on the above description, it can be seen that the use of M may be related to the inference results of the first model. The embodiment of the disclosure does not limit the value of M, for example, the value of M may be indicated by the first information. For another example, the value of M is obtained by one or more of the following information: predefined information; pre-configured information; system broadcast message; and other dedicated signaling. The embodiments of the disclosure are not limited thereto.

It is to be further noted that the value of M has a correlation relationship with the identifier of the model in the first information. In some implementations, the association relationship between the value of M and the identifier of the model in the first information may be a one-to-one association relationship, where the one-to-one association relationship may be understood as an association between one value of M and the identifier of one model. In other implementations, the association relationship between the value of M and the identifier of the model in the first information may be a one-to-many association relationship, which helps to reduce the resources required for transmitting the first information. Herein, the one-to-many association relationship may be understood as an association between one value of M and identifiers of a group of models, or the one-to-many association relationship may be understood as an association between one value of M and identifiers of a plurality of models, or the one-to-many association relationship may be understood as an association between one value of M and identifiers of all models in the first information.

Based on the above description of the implementation 2 of the starting condition, it can be seen that in the embodiment of the disclosure, if the first timer is in the stop state and m consecutive inference results of the first model do not meet the accuracy requirement, the first timer is not started (that is, the first timer continues to be in the stop state), where m is less than M.

In the implementation 1 of the stopping condition, the stopping condition of the first timer includes that the inference result of the first model meets the accuracy requirement, or in other words, the stopping condition of the first timer includes that a single-time inference result of the first model meets the accuracy requirement.

Of course, in the embodiment of the disclosure, the stopping condition may include other condition(s), for example, the stopping condition includes that the first timer is in a running state. That is, the stopping condition may include: the first timer is in the running state, and the inference result of the first model meets the accuracy requirement. For example, the stopping condition of the first timer includes: an absolute value of a difference between a single-time inference result of the first model and a corresponding actual result is less than or equal to an accuracy threshold, and the first timer is in the running state.

Based on the above description of the implementation 1 of the stopping condition, it can be seen that in the embodiment of the disclosure, if the first timer is in the running state and any inference result of the first model does not meet the accuracy requirement, the first timer is not stopped (that is, the first timer continues running).

In the implementation 2 of the stopping condition, the stopping condition of the first timer includes that N consecutive inference results of the first model meet the accuracy requirement, where N is a positive integer greater than or equal to 1. If N is a positive integer greater than 1, the stopping condition of the first timer can be replaced by the fact that multiple consecutive inference results of the first model meet the accuracy requirement.

Of course, in the embodiment of the disclosure, the stopping condition may include other condition(s), for example, the stopping condition includes that the first timer is in a running state. That is, the stopping condition may include: the first timer is in the running state, and the N consecutive inference results of the first model meet the accuracy requirement. For example, the stopping condition of the first timer includes: absolute values of differences between the N consecutive inference results of the first model and respective actual results are less than or equal to an accuracy threshold, and the first timer is in the running state.

It is to be noted that in an implementation, the fact that the absolute values of the differences between the N consecutive inference results of the first model and the respective actual results are less than or equal to the accuracy threshold can be understood as: an absolute value of a difference between each of the N consecutive inference results of the first model and a corresponding actual result is less than or equal to the accuracy threshold. For example, when the value of M is 2, the fact that the absolute values of the differences between the N consecutive inference results of the first model and the respective actual result are less than or equal to the accuracy threshold may include that an absolute value of a difference between a first inference result of the first model and an actual result corresponding to the first inference result is less than pr equal to the accuracy threshold, and an absolute value of a difference between a second inference result of the first model and an actual result corresponding to the second inference result is less than or equal to the accuracy threshold. In another implementation, the fact that the absolute values of the differences between the N consecutive inference results of the first model and the respective actual results are less than or equal to the accuracy threshold can be understood as: an absolute value of a difference between an average value of the N consecutive inference results of the first model and a latest obtained actual result is less than or equal to the accuracy threshold. For example, when the value of N is 2, the fact that the absolute value of the difference between the average value of the N consecutive inference results of the first model and the latest obtained actual result is less than or equal to the accuracy threshold may include that an absolute value of a difference between an average value of a first inference result and a second inference result of the first model and a second actual result obtained is less than or equal to the accuracy threshold. In another implementation, the fact that the absolute values of the differences between the N consecutive inference results of the first model and the respective actual results are less than or equal to the accuracy threshold can be understood as: an absolute value of a difference between an average value of the N consecutive inference results of the first model and an average value of N actual results obtained is less than or equal to the accuracy threshold. For example, when the value of N is 2, the fact that the absolute value of the difference between the average value of the N consecutive inference results of the first model and the average value of N actual results obtained is less than or equal to the accuracy threshold may include that an absolute value of a difference between an average value of a first inference result and a second inference result of the first model and an average value of two actual results obtained is less than or equal to the accuracy threshold.

In addition, based on the above description, it can be seen that the use of N may be related to the inference results of the first model. The embodiment of the disclosure does not limit the value of N, for example, the value of N may be indicated by the first information. For another example, the value of N is obtained by one or more of the following information: predefined information; pre-configured information; system broadcast message; and other dedicated signaling. The embodiments of the disclosure are not limited thereto.

It is to be further noted that the value of N has a correlation relationship with the identifier of the model in the first information. In some implementations, the association relationship between the value of N and the identifier of the model in the first information may be a one-to-one association relationship, where the one-to-one association relationship may be understood as an association between one value of N and the identifier of one model. In other implementations, the association relationship between the value of N and the identifier of the model in the first information may be a one-to-many association relationship, which helps to reduce the resources required for transmitting the first information. Herein, the one-to-many association relationship may be understood as an association between one value of N and identifiers of a group of models, or the one-to-many association relationship may be understood as an association between one value of N and identifiers of a plurality of models, or the one-to-many association relationship may be understood as an association between one value of N and identifiers of all models in the first information.

Based on the above description of the implementation 2 of the stopping condition, it can be seen that in the embodiment of the disclosure, if the first timer is in the running state and N consecutive inference results of the first model meet the accuracy requirement, the first timer is not stopped (that is, the first timer continues to be in the running state), where n is less than N.

It is to be noted that in the embodiments of the disclosure, the starting condition and the stopping condition of the first timer may be used alone or in combination with each other. For example, the implementation 1 of the starting condition can be used in combination with the implementation 1 of the stopping condition. For another example, the implementation 2 of the starting condition can be used in combination with the implementation 2 of the stopping condition.

In the example 2, the fourth parameter is used to configure running duration information of a second timer, and the second timer is associated with a reporting operation of a testing result of the first model, or in other words, the reporting operation of the testing result of the first model is triggered based on the second timer. For example, the reporting operation of the testing result of the first model is triggered based on the timeout of the second timer, or in other words, the first device may send the testing result of the first model to the second device in response to the timeout of the second timer.

In some implementations, a starting time of the second timer is determined based on a time when the first device receives the first information. For example, the starting time of the second timer may be a time when the first device receives the first information. For another example, the starting time of the second timer may be a time obtained by offsetting the time when the first device receives the first information by a first offset value, where the first offset value is determined by predefinition, pre-configuration, or configuration by a network device.

In other implementations, the starting time of the second timer is determined based on a time when the first device activates the first model (also referred to as an "activation time of the first model"). For example, the starting time of the second timer may be the activation time of the first model. For another example, the starting time of the second timer may be a time obtained by offsetting the activation time of the first model by a second offset value, where the second offset value is determined by predefinition, pre-configuration, or configuration by a network device.

It is to be noted that the duration information of the second timer has an association relationship with the identifier of the model in the first information. In some implementations, the association relationship between the duration information of the second timer and the identifier of the model in the first information may be a one-to-one association relationship, where the one-to-one association relationship may be understood as an association between the duration information of one second timer and the identifier of one model. In other implementations, the association relationship between the duration information of the second timer and the identifier of the model in the first information may be a one-to-many association relationship, which helps to reduce the resources required for transmitting the first information. Herein, the one-to-many association relationship may be understood as an association between duration information of one second timer and identifiers of a group of models, or the one-to-many association relationship may be understood as an association between duration information of one second timer and identifiers of a plurality of models, or the one-to-many association relationship may be understood as an association between duration information of one second timer and identifiers of all models in the first information.

In the example 3, the fourth parameter is used to configure a threshold for a target number of inferences for testing the first model.

In some implementations, the use of the threshold for the target number of inferences is related to the inference result of the first model, which will be described in detail below based on implementations 1 to 5, and will not be repeated here for the sake of brevity.

It is to be noted that the threshold for the target number of inferences has a correlation relationship with the identifier of the model in the first information. In some implementations, the association relationship between the threshold for the target number of inferences and the identifier of the model in the first information may be a one-to-one association relationship, where the one-to-one association relationship may be understood as an association between one threshold for the target number of inferences and the identifier of one model. In other implementations, the association relationship between the threshold for the target number of inferences and the identifier of the model in the first information may be a one-to-many association relationship, which helps to reduce the resources required for transmitting the first information. Herein, the one-to-many association relationship may be understood as an association between one threshold for the target number of inferences and identifiers of a group of models, or the one-to-many association relationship may be understood as an association between one threshold for the target number of inferences and identifiers of a plurality of models, or the one-to-many association relationship may be understood as an association between one threshold for the target number of inferences and identifiers of all models in the first information.

Several examples of the fourth parameter in the embodiments of the disclosure have been described above, and in some implementations, the examples of the fourth parameter may be used independently. In other implementations, several examples of the fourth parameter described above may be used in combination with each other. For example, the example 1 and the example 2 may be used in combination with each other, that is, the fourth parameter is used to configure the duration information of the first timer and the duration information of the second timer. For another example, the example 3 and the example 2 may be used in combination with each other, that is, the fourth parameter is used to configure the duration information of the second timer and the threshold for the target number of inferences.

In order to facilitate understanding, the following describes an implementation of testing-related information of the first model recorded by the first device and an implementation of transmission of the second information in the embodiments of the disclosure based on several examples of the fourth parameter in the embodiments of the disclosure.

In the **implementation 1,** it is assumed that the fourth parameter is used to configure the running duration information of the first timer (i.e., the example 1 above).

In some implementations, the above method further includes: when the first timer times out, the first device may send second information to the second device, and accordingly, the second device receives the second information sent by the first device. Herein, the second information includes an identifier of a first model associated with a first timer that times out, and the identifier of the first model associated with the first timer indicates that a timeout occurred in the first timer associated with the corresponding model.

In the embodiment of the disclosure, when the first timer times out, it can be understood that the first model does not meet the accuracy requirement, and at this time, the first device can promptly notify the second device through the second information.

In some implementations, the method further includes: when the first timer times out, the first device stops running a first model associated with the first timer that times out. Of course, in the embodiment of the disclosure, when the first timer times out, the first device may continue testing the first model.

In the **implementation 2,** it is assumed that the fourth parameter is used to configure the running duration information of the first timer and the running duration information of the second timer (i.e., the combination of the example 1 and the example 2 above).

In some implementations, the method further includes: during running of the second timer, when the first timer times out, the first device records an identifier of a first model associated with the first timer that times out, and stops running the first model associated with the first timer that times out; and/or, when the second timer times out, the first device sends second information to the second device. Accordingly, the second device receives the second information sent by the first device, where the second information includes an identifier of a first model associated with the first timer that times out, and the identifier of the first model associated with the first timer indicates that a timeout occurred in the first timer associated with the corresponding model.

In an embodiment of the disclosure, if the first timer times out, the first device may first record an identifier of the first model associated with the first timer, stop running the first model, and then send the identifier to the second device through the second information, after the second timer times out. That is to say, the first device does not need to immediately send the second information when the first timer associated with any one of the first models times out, but only needs to temporarily record the identifier corresponding to the first model and wait until the second timer times out to send, through the second information, the identification information of one or more first models associated with the first timer that times out, thereby avoiding the overheads required for frequent transmission of the second information.

For example, the running duration of the second timer is 60 seconds, and a model A, a model B and a model C need to be tested during the running of the second timer. It is assumed that when the first device receives the first information, the second timer starts to run, and a first timer associated with the model A times out at the 10th second after the second timer runs. At this time, the first device can stop running the model A and record an identifier of the model A. Then, at the 30th second after the second timer runs, a first timer associated with the model B times out. At which time, the first device can stop running the model B and record an identifier of the model B. At the 50th second after the second timer runs, a first timer associated with the model C times out. At this time, the first device stops running the model C and records an identifier of the model C. When the second timer times out (i.e., 60 seconds after the second timer runs), the first device reports second information to the second device, where the second information includes the identifier of the model A, the identifier of the model B, and the identifier of the model C. That is to way, the identifier of the model A, the identifier of the model B and the identifier of the model C can be sent at one time through the second information, which helps to reduce the resources required for transmission of the second information.

As described above, the identifier of the first model associated with the first timer that times out may be included in the second information, and thus, during running of the second timer, the first device may record the identifiers of the first models associated with the first timers that time out, for subsequent transmission through the second information. For example, if the first timer associated with the first model times out, the first device may record the identifier of the first model as a new information entry in the cache.

The embodiment of the disclosure does not impose specific limitations on the second information. In some implementations, the second information may further include one or more of the following (which can be referred to as information related to model testing): one or more model inference results of the first model during running of the second timer; actual results associated with the one or more model inference results of the first model during running of the second timer; a number of inferences that meet the accuracy requirement among the one or more model inference results of the first model during running of the second timer; a number of inferences that do not meet the accuracy requirements among the one or more model inference results of the first model during running of the second timer; proportion information or ratio information between the number of inferences that meet the accuracy requirement among the one or more model inference results of the first model during running of the second timer and a total number of model inferences of the first model; and proportion information or ratio information between the number of inferences that do not meet the accuracy requirement among the one or more model inference results of the first model during running of the second timer and the total number of inferences of the first model.

In some implementations, in order for the second device to obtain the distribution of inference results of the first model so that the second device can comprehensively analyze the testing performance of the first model, one or more model inference results of the first model during running of the second timer and actual results corresponding to the one or more model inference results may be reported through the second information in chronological order.

As described above, the second timer may be associated with a plurality of models. Taking the plurality of models associated with the second timer including the first model and the second model as an example, it is assumed that the first timer associated with the second model does not time out after the second timer times out. In some implementations, the second information may further carry an identifier of the second model. Herein, the identifier of the second model indicates a case where the first timer associated with the second model does not time out during running of the second timer.

It should be noted that although the first timer associated with the second model does not time out during running of the second timer, it does not mean that the second model meets the accuracy requirement. The determination as to whether the second model meets the accuracy requirement may be made based on the inference result of the second model during running of the second timer and actual result information associated with the inference result.

In some implementations, the testing-related information of the second model may be carried in the second information. That is, the plurality of models associated with the second information may include testing-related information of a model for which the first timer times out, and testing-related information of a model for which the first timer does not time out. That is to say, the second information may further include one or more of the following: identifiers of one or more first models participating in model testing during running of the second timer; one or more model inference results of each of the one or more first models during running of the second timer; actual results associated with the one or more model inference results of each of the one or more first models during running of the second timer; a number of inferences that meet the accuracy requirement among the one or more model inference results of each of the one or more first models during running of the second timer; a number of inferences that do not meet the accuracy requirements among the one or more model inference results of each of the one or more first models during running of the second timer; proportion information or ratio information between the number of inferences that meet the accuracy requirement among the one or more model inference results of each of the one or more first models during running of the second timer and a total number of model inferences of a corresponding first model; and proportion information or ratio information between the number of inferences that do not meet the accuracy requirement among the one or more model inference results of each of the one or more first models during running of the second timer and the total number of inferences of the corresponding first model.

In some implementations, if the second timer is associated with one or more first models, the method further includes: when the second timer times out, the first device stops running the one or more first models associated with the second timer.

In the **implementation 3,** it is assumed that the fourth parameter is used to configure the running duration information of the first timer and the running duration information of the second timer (i.e., the combination of the example 1 and the example 2 above).

In some implementations, the above method further includes: during running of the second timer, when the first timer times out, the first device records an identifier of a first model associated with the first timer that times out and timeout number information of the first timer; and/or, when the second timer times out, the first device sends second information to the second device. Accordingly, the second device receives the second information sent by the first device, the second information includes an identifier of a first model associated with a first timer that times out for at least one time, and timeout number information of the first timer.
Herein, the identifier of the first model may be used to indicate that the first timer associated with the first model has timed out at least once.

In some implementations, the operation that the first device records an identifier of a first model associated with the first timer that times out and timeout number information of the first timer includes: if an information entry associated with a first timer that times out is not recorded in a cache of the first device, the first device creates a new information entry, and records, in the new information entry, the identifier of the first model associated with the first timer that times out and records the timeout number information of the first timer as 1, where an initial value of the timeout number information of the first timer may be 0; and/or, if the information entry associated with the first timer that times out is recorded in the cache of the first device, the first device increments a value of the stop number information of the first timer recorded in a corresponding information entry by 1.

For example, the number of times that the first timer times out may be counted by a counter associated with the first timer, and accordingly, an initial value of the counter may be 0. If the information entry associated with the first timer that times out is not recorded in the cache of the first device, a count value of the counter associated with the first timer becomes 1; and/or, if the information entry associated with the first timer that times out is recorded in the cache of the first device, the first device increments the count value of the counter associated with the first timer by 1.

In the embodiment of the disclosure, during running of the second timer, if the first timer associated with the first model times out, the first device does not immediately send the second information, and does not need to immediately stop running the first model, but only needs to temporarily record the identifier of the corresponding first model and the timeout number of the first timer. Thereafter, the first model will continue running, that is, the testing of the first model will continue. Then, when the first timer times out again, the timeout number of the first timer is updated until the second timer times out, and the first device sends the second information to the second device, where the second information contains all information entries recorded during the running of the second timer. In this way, it is helpful to reduce the overheads required for transmission of the second information, to avoid the situation of judging whether a first model has good performance based on one timeout of the first timer, and to improve the accuracy of testing the first model.

For example, the running duration of the second timer is 60 seconds, and a model A, a model B and a model C need to be tested during the running of the second timer. It is assumed that when the first device receives the first information, the second timer starts to run, and a first timer associated with the model A times out at the 10th second after the second timer runs. At this time, the first device can record an identifier of the model A, and a timeout number (i.e., 1) of the first timer associated with the model A. At this time, the model A continues running. Then, at the 16th second after the second timer runs, a first timer associated with the model B times out. At this time, the first device can record an identifier of the model B and a timeout number (i.e., 1) of the first timer associated with the model B. At this time, the model B continues running. Then, at the 20th second after the second timer runs, the first timer associated with the model A times out, and at this time, the first device can update the timeout number of the first timer associated with the model A to 2, and at this time, the model A continues running. At the 30th second after the second timer runs, the first timer associated with the model B times out, and at this time, the first device may update the timeout number of the first timer associated with the model B to 2, and at this time, the model B continues running. Then, at the 32nd second after the second timer runs, the first timer associated with the model A times out, and at this time, the first device can update the timeout number of the first timer associated with the model A to 3, and at this time, the model A continues running. Then, at the 50th second after the second timer runs, the first timer associated with the model C times out. At this time, the first device can record an identifier of the model C and the timeout number (i.e., 1) of the first timer associated with the model C. At this time, the model C continues running. When the second timer times out (i.e., 60 seconds after the second timer runs), the first device reports second information to the second device, where the second information includes: the identifier of the model A and the timeout number (i.e., 3) of the first timer associated with the model A; the identifier of the model B and the timeout number (i.e., 2) of the first timer associated with the model B; and the identifier of the model C and the timeout number (i.e., 1) of the first timer associated with the model C. That is, the identifier of the model A, the identifier of the model B, the identifier of the model C and the timeout number of the first timer associated with each model can be transmitted through the second information, which helps to reduce the resources required for transmission of the second information.

From the above description, it can be understood that the timeout number of the first timer can be understood as a number of times that a first timer associated with each model times out when the second timer times out.

The embodiment of the disclosure does not impose specific limitations on the second information. In some implementations, the second information may further include one or more of the following: one or more model inference results of the first model during running of the second timer; actual results associated with the one or more model inference results of the first model during running of the second timer; a number of inferences that meet the accuracy requirement among the one or more model inference results of the first model during running of the second timer; a number of inferences that do not meet the accuracy requirements among the one or more model inference results of the first model during running of the second timer; proportion information or ratio information between the number of inferences that meet the accuracy requirement among the one or more model inference results of the first model during running of the second timer and a total number of model inferences of the first model; and proportion information or ratio information between the number of inferences that do not meet the accuracy requirement among the one or more model inference results of the first model during running of the second timer and the total number of inferences of the first model.

In some implementations, in order for the second device to obtain the distribution of inference results of the first model so that the second device can comprehensively analyze the testing performance of the first model, one or more model inference results of the first model during running of the second timer and actual results corresponding to the one or more model inference results may be reported through the second information in chronological order.

As described above, the second timer may be associated with a plurality of models. Taking the plurality of models associated with the second timer including the first model and the second model as an example, it is assumed that the first timer associated with the second model does not time out after the second timer times out. In some implementations, the second information may further carry an identifier of the second model. Herein, the identifier of the second model indicates a case where the first timer associated with the second model does not time out during running of the second timer.

It should be noted that although the first timer associated with the second model does not time out during running of the second timer, it does not mean that the second model meets the accuracy requirement. The determination as to whether the second model meets the accuracy requirement may be made based on the inference result of the second model during running of the second timer and actual result information associated with the inference result.

In some implementations, the testing-related information of the second model may be carried in the second information. That is, the plurality of models associated with the second information may include testing-related information of a model for which the first timer times out, and testing-related information of a model for which the first timer does not time out. That is to say, the second information may further include one or more of the following: identifiers of one or more first models participating in model testing during running of the second timer; one or more model inference results of each of the one or more first models during running of the second timer; actual results associated with the one or more model inference results of each of the one or more first models during running of the second timer; a number of inferences that meet the accuracy requirement among the one or more model inference results of each of the one or more first models during running of the second timer; a number of inferences that do not meet the accuracy requirements among the one or more model inference results of each of the one or more first models during running of the second timer; proportion information or ratio information between the number of inferences that meet the accuracy requirement among the one or more model inference results of each of the one or more first models during running of the second timer and a total number of model inferences of a corresponding first model; and proportion information or ratio information between the number of inferences that do not meet the accuracy requirement among the one or more model inference results of each of the one or more first models during running of the second timer and the total number of inferences of the corresponding first model.

In some implementations, if the second timer is associated with one or more first models, the method further includes: when the second timer times out, the first device stops running the one or more first models associated with the second timer.

In the **implementation 4,** it is assumed that the fourth parameter is used to configure the running duration information of the second timer (i.e., the example 2 above).

In some implementations, the method further includes: when the second timer times out, the first device sends second information to the second device. Accordingly, the second device receives the second information sent by the first device, where the second information includes one or more model testing results recorded during running of the second timer, and models corresponding to the model testing results recorded during running of the second timer (hereinafter simply referred to as models tested during running of the second timer) include one or more first models. The model testing results recorded during running of the second timer may include one or more inference results of the corresponding model.

In the embodiment of the disclosure, if the second timer times out, the first device may send second information to the second device to indicate testing results of one or more first models recorded during running of the second timer, which helps to reduce the complexity of recording the testing results.

The embodiment of the disclosure does not impose specific limitations on the second information. In some implementations, the second information may further include one or more of the following: identifiers of one or more first models participating in model testing during running of the second timer; one or more model inference results of each of the one or more first models during running of the second timer; actual results associated with the one or more model inference results of each of the one or more first models during running of the second timer; a number of inferences that meet the accuracy requirement among the one or more model inference results of each of the one or more first models during running of the second timer; a number of inferences that do not meet the accuracy requirements among the one or more model inference results of each of the one or more first models during running of the second timer; proportion information or ratio information between the number of inferences that meet the accuracy requirement among the one or more model inference results of each of the one or more first models during running of the second timer and a total number of model inferences of a corresponding first model; and proportion information or ratio information between the number of inferences that do not meet the accuracy requirement among the one or more model inference results of each of the one or more first models during running of the second timer and the total number of inferences of the corresponding first model.

In some implementations, in order for the second device to obtain the distribution of inference results of the first model so that the second device can comprehensively analyze the testing performance of the first model, one or more model inference results included in the testing results of each first model during running of the second timer and actual results corresponding to the one or more model inference results may be reported through the second information in chronological order.

In some implementations, if the second timer is associated with one or more first models, the method further includes: when the second timer times out, the first device stops running the one or more first models associated with the second timer.

In the **implementation 4,** it is assumed that the fourth parameter is used to configure the threshold for the target number of inferences (i.e., the example 3 above).

In some implementations, the method further includes: when a number of inferences for testing the first model reaches the threshold for the target number of inferences, the first device sends second information to the second device. Accordingly, the second device receives the second information sent by the first device, where the second information includes a testing result of testing the first model. Herein, the testing results of the first model may include one or more inference results of the first model.

In the embodiment of the disclosure, if the number of inferences for testing the first model reaches the threshold for the target number of inferences, the first device may send the second information to the second device, that is, the testing results of different models may be sent separately, which helps to prevent the first device from recording the testing result of each model for a long time using the cache, thereby reducing the occupancy rate of the cache space.

The embodiment of the disclosure does not impose specific limitations on the second information. In some implementations, the second information may further include one or more of the following: an identifier of the first model; one or more model inference results of the first model; actual results associated with the one or more model inference results of the first model; a number of inferences that meet the accuracy requirement among the one or more model inference results of the first model; a number of inferences that do not meet the accuracy requirements among the one or more model inference results of the first model; proportion information or ratio information between the number of inferences that meet the accuracy requirement among the one or more model inference results of the first model and a total number of model inferences of the first model; and proportion information or ratio information between the number of inferences that do not meet the accuracy requirement among the one or more model inference results of the first model and the total number of inferences of the first model.

In some implementations, in order for the second device to obtain the distribution of inference results of the first model so that the second device can comprehensively analyze the testing performance of the first model, one or more model inference results of the first model included in the testing result of the first model and actual results corresponding to the one or more model inference results may be reported through the second information in chronological order.

In the **implementation 5,** it is assumed that the fourth parameter is used to configure the threshold for the target number of inferences and the running duration information of the second timer (i.e., the combination of the example 3 and the example 2 above).

In some implementations, the above method further includes: during running of the second timer, when a number of inferences for testing the first model reaches the threshold for the target number of inferences, the first device stops running the first model for which the number of inferences reaches the threshold for the target number of inferences; and/or, when the second timer times out, the first device sends second information to the second device. Accordingly, the second device receives the second information sent by the first device, where the second information includes model testing results recorded during running of the second timer, and models corresponding to the model testing results recorded during running of the second timer comprise the first model.

It is to be noted that the model testing results recorded during running of the second timer may include one or more inference results of a corresponding model. Taking the model testing results recorded during running of the second timer including the testing result of the first model as an example, the testing result of the first model may include one or more inference results of the first model.

In the embodiment of the disclosure, when the number of inferences for testing the first model reaches the threshold for the target number of inferences, the first device may first record the identifier of the first model and stop running the first model, and then send the second information to the second device after the second timer times out. That is to say, the first device does not need to send the second information immediately when the number of inferences of the first model reaches the threshold for the target number of inferences, but only needs to temporarily record the identifier of the first model and send it through the second information after the second timer expires. In this way, it is helpful to save the overheads required for transmission of the second information.

For example, the running duration of the second timer is 60 seconds, and a model A and a model B need to be tested during running of the second timer. It is assumed that when the first device receives the first information, the second timer starts to run, and the number of inferences of the model A reaches the threshold for the target number of inferences at the 30th second after the second timer runs. At this time, the first device may stop running the model A and record an identifier of the model A. Then, at the 50th second after the second timer runs, the number of inferences of the model B reaches the threshold for the target number of inferences. At this time, the first device may stop running the model B and record an identifier of the model B. When the second timer times out (i.e., 60 seconds after the second timer runs), the first device reports second information to the second device, where the second information includes the identifier of the model A and the identifier of the model B. That is, both the identifier of the model A and the identifier of the model B can be sent through the second information, which helps to reduce the resources required for transmission of the second information.

During running of the second timer, the first device may record an identifier of the first model whose number of inferences reaches the threshold for the target number of inferences, so as to be sent subsequently by the second information. For example, if the number of inferences for testing the first model reaches the threshold for the target number of inferences, the first device may record the identifier of the first model as a new information entry in the cache.

The embodiment of the disclosure does not impose specific limitations on the second information. In some implementations, the second information may further include one or more of the following: an identifier of the first model; one or more model inference results of the first model during running of the second timer; actual results associated with the one or more model inference results of the first model during running of the second timer; a number of inferences that meet the accuracy requirement among the one or more model inference results of the first model during running of the second timer; a number of inferences that do not meet the accuracy requirements among the one or more model inference results of the first model during running of the second timer; proportion information or ratio information between the number of inferences that meet the accuracy requirement among the one or more model inference results of the first model during running of the second timer and a total number of model inferences of the first model; and proportion information or ratio information between the number of inferences that do not meet the accuracy requirement among the one or more model inference results of the first model during running of the second timer and the total number of inferences of the first model.

In some implementations, in order for the second device to obtain the distribution of inference results of the first model so that the second device can comprehensively analyze the testing performance of the first model, one or more model inference results of the first model included in the testing result of the first model during running of the second timer and actual results corresponding to the one or more model inference results may be reported through the second information in chronological order.

As described above, the second timer may be associated with a plurality of models, and accordingly, the second information may include identifiers of models that actually participate in model testing during running of the second timer. Taking the plurality of models associated with the second timer including the first model and the second model as an example, it is assumed that the number of inferences of the second model does not reach the threshold for the target number of inferences after the second timer times out. In some implementations, the second information may further carry an identifier of the second model. Herein, the identifier of the second model indicates a case where the number of inferences of the second model does not reach the threshold for the target number of inferences.

It should be noted that although the number of inferences of the second model do not reach the threshold for the target number of inference, it does not mean that the testing result of the second model does not meet the accuracy requirement. The determination as to whether the second model meets the accuracy requirement may be made based on the model inference result of the second model during running of the second timer and actual result information corresponding to the model inference result.

In some implementations, the information related to the inference result of the second model may be carried in the second information. That is, the plurality of models associated with the second information may include: information related to inference results of a model whose number of inferences reaches the threshold for the target number of inferences, and information related to inference results of a model whose number of inferences does not reach the threshold for the target number of inferences. That is to say, the second information may further include one or more of the following: identifiers of one or more first models participating in model testing during running of the second timer; one or more model inference results of each of the one or more first models during running of the second timer; actual results associated with the one or more model inference results of each of the one or more first models during running of the second timer; a number of inferences that meet the accuracy requirement among the one or more model inference results of each of the one or more first models during running of the second timer; a number of inferences that do not meet the accuracy requirements among the one or more model inference results of each of the one or more first models during running of the second timer; proportion information or ratio information between the number of inferences that meet the accuracy requirement among the one or more model inference results of each of the one or more first models during running of the second timer and a total number of model inferences of a corresponding first model; and proportion information or ratio information between the number of inferences that do not meet the accuracy requirement among the one or more model inference results of each of the one or more first models during running of the second timer and the total number of inferences of the corresponding first model.

In some implementations, if the second timer is associated with one or more first models, the method further includes: when the second timer times out, the first device stops running the one or more first models associated with the second timer.

In some implementations, the method further includes: when a first condition is met, the first device performs a first operation including one or more of: stopping running one or more first models that are being tested in the first device; stopping a timer running in the first device and related to testing of the model; deleting a configuration comprised in the first information that is stored; and clearing record information recorded in a cache of the first device and associated with a testing process of the first model.

If the first operation includes stopping the timer running in the first device and related to testing of the model, the timer related to testing of the first model may comprise, for example, the first timer and/or the second timer described above.

If the first operation includes deleting the configuration comprised in the first information that is stored, the configuration included in the first information may be, for example, one or more of following involved in the description above: the identifier of the first model; the first parameter; the second parameter; the third parameter; and the fourth parameter.

If the first operation includes clearing record information recorded in the cache of the first device and associated with the testing process of the first model, the record information associated with the testing process of the first model may be, for example, one or more of the information stored in the cache described above, or in other words, the record information associated with the testing process of the first model may be, for example, one or more of the information to be carried in the second information described above.

In some implementations, the first condition includes one or more of the following: the first device triggers a connection re-establishment; the first device triggers a radio link failure; the first device triggers a beam failure; the first device receives synchronization reconfiguration information; the first device performs a handover; the first device receives a connection release message; and the first device receives a first instruction sent by the second device, the first instruction is used to instruct the first device to stop testing the first model.

In some implementations, the method further includes: the second device sends the first instruction to the first device, the first instruction being used to instruct the first device to stop testing the first model.

In some implementations, the method further includes: the first device sends first suggestion information to the second device. Accordingly, the second device receives the first suggestion information sent by the first device, where the first suggestion information includes an identifier of a model that the first device expects to pause testing, or the first suggestion information is used to indicate to the second device that the first device expects to pause testing all models.

In some implementations, the method further includes: the first device receives first indication information sent by the second device. Accordingly, the second device sends the first indication information to the first device, where the first indication information is used to indicate whether the first device is allowed to send the first suggestion information. At this time, if the first instruction information indicates that the first device is allowed to send the first suggestion information, the first device may send the first suggestion information to the second device. Conversely, if the first indication information indicates that the first device is not allowed to send the first suggestion information, the first device may not send the first suggestion information to the second device. Of course, in the embodiment of the disclosure, the first suggestion information may be directly sent by the first device without first determining based on the first indication information whether the first suggestion information can be sent.

In some implementations, the method further includes: the first device sends first capability information to the second device. Accordingly, the second device receives the first capability information sent by the first device. The first capability information is used to indicate one or more of: whether the first device supports a model testing function; one or more identifiers of models for which the first device supports the model testing function;
one or more identifiers of models for which the first device does not support the model testing function; a number of models for which the first device supports simultaneous model testing; and whether the first device supports reporting first suggestion information, where the first suggestion information indicates a model that the first device expects to pause testing, or the first suggestion information is used to indicate that the first device expects to pause testing all models.

In the embodiments of the disclosure, any of the above-mentioned information (e.g., one or more of the first information, the second information, the first suggestion information, the first indication information, and the first capability information) may be carried by one or more types of the following message: NR Positioning Protocol A (NRPPa) message, Long term evolution Positioning Protocol (LPP) Message, Non-access Stratum (NAS) message, Radio Resource Control (RRC) message, Media Access Control Control Element (MAC CE), Downlink Control Information (DCI), Uplink Control Information (UCI), Physical Uplink Control Channel (PUCCH), Physical Uplink Shared Channel (PUSCH), inter-node message, Xn interface message, F1 interface message, E1 interface message, NG interface message, service-based architecture message in core network, or AI-specific message.

In the embodiments of the disclosure, any of the above-described information may be carried by one or more of a unicast message, a multicast message, and a broadcast message.

The unicast message can be understood as one-to-one transmission information, that is, a message sent from a sending end to a receiving end. In this case, an information source transmits the unicast message through the unicast channel, and only the terminal device or network device to which the corresponding unicast resource is allocated can attempt to receive the unicast message, and the unicast message can also be called dedicated signaling.

The multicast message can be understood as one-to-many transmission information, that is, a message sent from one sending end to a plurality of receiving ends. In this case, the information source transmits a multicast message through a multicast channel, and a terminal device or a network device that is within the multicast signal coverage and is a member of a group can attempt to receive the multicast message. When joining the group, the terminal device or the network device will acquire resources related to the multicast channel.

The broadcast message can be understood as arbitrarily transmitted information, that is, a message sent from one sending end to any receiving end. In this case, the information source transmits the broadcast message through a broadcast channel, and any terminal device or network device within the coverage range of the broadcast signal can attempt to receive the broadcast message.

The embodiment of the disclosure does not impose limitations on the first device and/or the second device. For example, the first device is a terminal device, and the second device is a network device. For another example, the first device is a network device, and the second device is a terminal device. For another example, the first device is a first terminal device, and the second device is a second terminal device. For another example, the first device is a first network device, and the second device is a second network device.

The network device is an access network device, or a core network device, or a device for managing AI/ML model related information, or an Operation Administration and Maintenance (OAM) device. Exemplarily, the access network device is any one of: a gNB, a Centralized Unit (CU), a Distributed Unit (DU), a Centralized Unit-Control Plane (CU-CP), and a Centralized Unit-User Plane (CU-UP).

Exemplarily, the core network device is any one of: a Location Management Function (LMF) network element, a Network Slice Selection Function (NSSF), an Authentication Server Function (AUSF), a Unified Data Management (UDM) function, an Access and Mobility management function (AMF), a Session Management Function (SMF), a Policy Control Function (PCF), a User Plane Function (UPF), a Sensing Function (SF), and a Network Data Analysis Function (NWDAF) network element.

The embodiments of the method of the disclosure are described in detail with reference to FIG. 1 to FIG. 2, and embodiments of the device of the disclosure are described in detail with reference to FIG. 3 to FIG. 5. It should be understood that the description of the method embodiments corresponds to the description of respective device embodiments, therefore for portions not described in detail, reference can be made to the foregoing method embodiments.

FIG. 3 is a schematic diagram of a communication device according to an embodiment of the disclosure. The communication device 300 illustrated in FIG. 3 is a first device, and includes a receiving unit 310.

The receiving unit 310 is configured to receive first information sent by a second device, the first information being used for performing performance testing and/or performance evaluation on a first model not activated for use in the first device.

In one possible implementation, the first information includes one or more of: an identifier of the first model; a first parameter for determining an activation time of the first model; a second parameter for determining whether an inference result of the first model meets an accuracy requirement; a third parameter for configuring a reference signal for testing the first model; and a fourth parameter associated with a testing process of the first model.

In a possible implementation, if the first information includes the first parameter, the first parameter is used to configure first time delay information, and the first device activates the first model after a duration corresponding to the first time delay information has elapsed from a time when the first information is received; or, the first parameter is used to configure information about an absolute time when the first model is activated.

In a possible implementation, if the first information includes the second parameter, the second parameter includes an accuracy threshold, and if an absolute value of a result difference between the inference result of the first model and an actual result is less than or equal to the accuracy threshold, the inference result of the first model is considered to meet the accuracy requirement.

In a possible implementation, if the first information includes the fourth parameter, the fourth parameter is used to configure running duration information of a first timer, and the first timer is associated with the inference result of the first model.

In a possible implementation, the communication device further includes: a first sending unit, configured to, when the first timer times out, send second information to the second device, wherein the second information includes an identifier of a first model associated with the first timer that times out, and the identifier of the first model associated with the first timer indicates that a timeout occurred in the first timer associated with the corresponding model.

In a possible implementation, the communication device further includes: a first processing unit, configured to, when the first timer times out, stop running a first model associated with the first timer that times out.

In a possible implementation, the fourth parameter is used to configure running duration information of a second timer, and the second timer is associated with a reporting operation of a testing result of the first model.

In a possible implementation, the communication device further includes: a second processing unit, configured to, during running of the second timer, when the first timer times out, record an identifier of a first model associated with the first timer that times out, and stop running the first model associated with the first timer that times out; and/or, a second sending unit, configured to, when the second timer times out, send second information to the second device, wherein the second information includes an identifier of a first model associated with the first timer that times out, and the identifier of the first model associated with the first timer indicates that a timeout occurred in the first timer associated with the corresponding model.

In a possible implementation, the communication device further includes: a third processing unit, configured to, during running of the second timer, when the first timer times out, record an identifier of a first model associated with the first timer that times out and timeout number information of the first timer; and/or, a third sending unit, configured to, when the second timer times out, send second information to the second device, wherein the second information includes an identifier of a first model associated with a first timer that times out for at least one time, and timeout number information of the first timer.

In a possible implementation, if an information entry associated with a first timer that times out is not recorded in a cache of the first device, the third processing unit is configured to create a new information entry, and record, in the new information entry, the identifier of the first model associated with the first timer that times out and record the timeout number information of the first timer as 1; and/or, if the information entry associated with the first timer that times out is recorded in the cache of the first device, the third processing unit is configured to increment a value of the stop number information of the first timer recorded in a corresponding information entry by 1.

In a possible implementation, a starting condition of the first timer includes that the inference result of the first model does not meet the accuracy requirement; and/or a stopping condition of the first timer includes that the inference result of the first model meets the accuracy requirement.

In a possible implementation, the starting condition of the first timer includes that M consecutive inference results of the first model do not meet the accuracy requirement, wherein M is a positive integer greater than or equal to 1; and/or, the stopping condition of the first timer includes that N consecutive inference results of the first model meet the accuracy requirement, wherein N is a positive integer greater than or equal to 1.

In a possible implementation, the fourth parameter is used to configure running duration information of a second timer, and the second timer is associated with a reporting operation of a testing result of the first model.

In a possible implementation, the communication device further includes: a fourth sending unit, configured to, when the second timer times out, send second information to the second device, wherein the second information includes model testing results recorded during running of the second timer, and models corresponding to the model testing results recorded during running of the second timer comprise the first model.

In a possible implementation, if the first information includes the fourth parameter, the fourth parameter is used to configure a threshold for a target number of inferences for testing the first model.

In a possible implementation, the communication device further includes: a fifth sending unit, configured to, when a number of inferences for testing the first model reaches the threshold for the target number of inferences, send second information to the second device, the second information including a testing result of testing the first model.

In a possible implementation, the fourth parameter is used to configure a duration of a second timer, and the second timer is associated with a reporting operation of a testing result of the first model.

In a possible implementation, the communication device further includes: a fourth processing unit, configured to, during running of the second timer, when a number of inferences for testing the first model reaches the threshold for the target number of inferences, stop running the first model for which the number of inferences reaches the threshold for the target number of inferences; and/or, a sixth sending unit, configured to, when the second timer times out, send second information to the second device, wherein the second information includes model testing results recorded during running of the second timer, and models corresponding to the model testing results recorded during running of the second timer comprise the first model.

In a possible implementation, the second information includes one or more of the following: one or more model inference results of the first model during running of the second timer; actual results associated with the one or more model inference results of the first model during running of the second timer; a number of inferences that meet the accuracy requirement among the one or more model inference results of the first model during running of the second timer; a number of inferences that do not meet the accuracy requirements among the one or more model inference results of the first model during running of the second timer; proportion information or ratio information between the number of inferences that meet the accuracy requirement among the one or more model inference results of the first model during running of the second timer and a total number of model inferences of the first model during running of the second timer; and proportion information or ratio information between the number of inferences that do not meet the accuracy requirement among the one or more model inference results of the first model during running of the second timer and the total number of model inferences of the first model during running of the second timer.

In a possible implementation, the second timer is associated with one or more first models, and the communication device further includes: a fifth processing unit, configured to, when the second timer times out, stop running the one or more first models associated with the second timer.

In a possible implementation, a starting time of the second timer is determined based on a time when the first device receives the first information, or the starting time of the second timer is determined based on a time when the first device activates the first model.

In a possible implementation, the communication device further includes: a sixth processing unit, configured to, when a first condition is met, perform a first operation including one or more of: stopping running one or more first models that are being tested in the first device; stopping a timer running in the first device and related to testing of the model; deleting a configuration comprised in the first information that is stored; and clearing record information recorded in a cache of the first device and associated with a testing process of the first model.

In a possible implementation, the first condition includes one or more of: the first device triggers a connection re-establishment; the first device triggers a radio link failure; the first device triggers a beam failure; the first device receives synchronization reconfiguration information; the first device performs a handover; the first device receives a connection release message; and the first device receives a first instruction sent by the second device, the first instruction instructing the first device to stop testing the first model.

In a possible implementation, the communication device further includes: a seventh sending unit, configured to send first suggestion information to the second device, wherein the first suggestion information includes an identifier of a model that the first device expects to pause testing or the first suggestion information is used to indicate to the second device that the first device expects to pause testing all models.

In a possible implementation, the communication device further includes: an eighth sending unit, configured to send first capability information to the second device, wherein the first capability information is used to indicate one or more of: whether the first device supports a model testing function;
one or more identifiers of models for which the first device supports the model testing function; one or more identifiers of models for which the first device does not support the model testing function; a number of models for which the first device supports simultaneous model testing; and whether the first device supports reporting first suggestion information, where the first suggestion information indicates a model that the first device expects to pause testing, or the first suggestion information is used to indicate that the first device expects to pause testing all models.

FIG. 4 is a schematic diagram of a communication device according to an embodiment of the disclosure. The communication device 400 illustrated in FIG. 4 is a second device, and includes a sending unit 410.

The sending unit 410 is configured to send first information to a first device, the first information being used for performing performance testing and/or performance evaluation on a first model not activated for use by the first device.

In one possible implementation, the first information includes one or more of: an identifier of the first model; a first parameter for determining an activation time of the first model; a second parameter for determining whether an inference result of the first model meets an accuracy requirement; a third parameter for configuring a reference signal for testing the first model; and a fourth parameter associated with an inference result of the first model.

In a possible implementation, if the first information includes the first parameter, the first parameter is used to configure first time delay information, and the first device activates the first model after a duration corresponding to the first time delay information has elapsed from a time when the first information is received; or, the first parameter is used to configure information about an absolute time when the first model is activated.

In a possible implementation, if the first information includes the second parameter, the second parameter includes an accuracy threshold, and if an absolute value of a result difference between the inference result of the first model and an actual result is less than or equal to the accuracy threshold, the inference result of the first model is considered to meet the accuracy requirement.

In a possible implementation, if the first information includes the fourth parameter, the fourth parameter is used to configure running duration information of a first timer, and the first timer is associated with the inference result of the first model.

In a possible implementation, the communication device further includes: a first receiving unit, configured to receive second information sent by the first device, wherein the second information includes an identifier of a first model associated with a first timer that times out, and the identifier of the first model associated with the first timer indicates that a timeout occurred in the first timer associated with the corresponding model.

In a possible implementation, the fourth parameter is used to configure running duration information of a second timer, and the second timer is associated with a reporting operation of a testing result of the first model.

In a possible implementation, the communication device further includes: a second receiving unit, configured to receive second information sent by the first device, wherein the second information includes an identifier of a first model associated with a first timer that times out, and the identifier of the first model associated with the first timer indicates that a timeout occurred in the first timer associated with the corresponding model, information comprised in the second information being recorded during running of the second timer.

In a possible implementation, the communication device further includes: a third receiving unit, configured to receive second information sent by the first device, wherein the second information includes an identifier of a first model associated with a first timer that times out for at least one time and timeout number information of the first timer, information comprised in the second information being recorded during running of the second timer.

In a possible implementation, the fourth parameter is used to configure running duration information of a second timer, and the second timer is associated with a reporting operation of a testing result of the first model.

In a possible implementation, the communication device further includes: a fourth receiving unit, configured to receive second information sent by the first device, wherein the second information includes model testing results recorded during running of the second timer, and models corresponding to the model testing results recorded during running of the second timer comprise the first model.

In a possible implementation, if the first information includes the fourth parameter, the fourth parameter is used to configure a threshold for a target number of inferences for testing the first model.

In a possible implementation, the communication device further includes: a fifth receiving unit, configured to receive second information sent by the first device, the second information including a testing result of testing the first model.

In a possible implementation, the fourth parameter is used to configure a duration of a second timer, and the second timer is associated with a reporting operation of a testing result of the first model.

In a possible implementation, the communication device further includes: a sixth receiving unit, configured to receive second information sent by the first device, wherein the second information includes model testing results recorded during running of the second timer, and models corresponding to the model testing results recorded during running of the second timer comprise the first model.

In a possible implementation, the second information includes one or more of the following: one or more model inference results of the first model during running of the second timer; actual results associated with the one or more model inference results of the first model during running of the second timer; a number of inferences that meet the accuracy requirement among the one or more model inference results of the first model during running of the second timer; a number of inferences that do not meet the accuracy requirements among the one or more model inference results of the first model during running of the second timer; proportion information or ratio information between the number of inferences that meet the accuracy requirement among the one or more model inference results of the first model during running of the second timer and a total number of model inferences of the first model during running of the second timer; and proportion information or ratio information between the number of inferences that do not meet the accuracy requirement among the one or more model inference results of the first model during running of the second timer and the total number of model inferences of the first model during running of the second timer.

In a possible implementation, the communication device further includes: a seventh receiving unit, configured to receive first suggestion information sent by the first device, where the first suggestion information includes an identifier of a model that the first device expects to pause testing or the first suggestion information is used to indicate to the second device that the first device expects to pause testing all models.

In a possible implementation, the communication device further includes: an eighth receiving unit, configured to receive first capability information sent by the first device, wherein the first capability information is used to indicate one or more of: whether the first device supports a model testing function; one or more identifiers of models for which the first device supports the model testing function; one or more identifiers of models for which the first device does not support the model testing function; a number of models for which the first device supports simultaneous model testing; and whether the first device supports reporting first suggestion information, where the first suggestion information indicates a model that the first device expects to pause testing, or the first suggestion information is used to indicate that the first device expects to pause testing all models.

In an optional embodiment, the receiving unit 310 may be a transceiver 530. The communication device 300 may further include a processor 510 and a memory 520, as specifically shown in FIG. 5.

In an optional embodiment, the sending unit 410 may be a transceiver 530. The communication device 400 may further include a processor 510 and a memory 520, as specifically shown in FIG. 5.

FIG. 5 is a schematic structural diagram of a communication device according to an embodiment of the disclosure. The dashed line in FIG. 5 indicates that the unit or module is optional. The apparatus 500 may be used to implement the method in the method embodiments described above. The apparatus 500 may be a chip, a terminal device, or a network device.

The apparatus 500 may include one or more processors 510. The processor 510 may support the apparatus 500 to implement the methods described in the previous method embodiments. The processor 510 may be a general-purpose processor or a special-purpose processor. For example, the processor may be a Central Processing Unit (CPU). Alternatively, the processor may also be another general purpose processor, a Digital Signal Processor (DSP), an Application Specific Integrated Circuit (ASIC), a Field Programmable Gate Array (FPGA) or other programmable logic device, a discrete gate or transistor logic device, a discrete hardware component, or the like. The general-purpose processor may be a microprocessor or the processor may be any conventional processor or the like.

The apparatus 500 may also include one or more memories 520. The memory 520 has stored a program that can be executed by the processor 510 to cause the processor 510 to perform the method described in the above method embodiments. The memory 520 may be independent of the processor 510 or may be integrated in the processor 510.

The apparatus 500 may also include a transceiver 530. The processor 510 may communicate with other devices or chips through the transceiver 530. For example, the processor 510 may transmit and receive data to or from other devices or chips through the transceiver 530.

The embodiments of the disclosure also provide a computer-readable storage medium for storing a program. The computer-readable storage medium can be applied to a terminal or a network device provided by an embodiment of the disclosure, and the program causes a computer to implement a method performed by the terminal or the network device in each embodiment of the disclosure.

The embodiments of the disclosure also provide a computer program product. The computer program product includes a program. The computer program product can be applied to a terminal or a network device provided by an embodiment of the disclosure, and the program causes a computer to implement a method performed by the terminal or the network device in each embodiment of the disclosure.

The embodiments of the disclosure also provide a computer program. The computer program can be applied to a terminal or a network device provided by an embodiment of the disclosure, and the computer program causes a computer to implement a method performed by the terminal or the network device in each embodiment of the disclosure.

It is to be understood that the terms "system" and "network" may be used interchangeably in the disclosure. In addition, the terminology used in the disclosure is for explanation of specific embodiments of the disclosure only, and is not intended to limit the disclosure. The terms "first", "second", "third" and "fourth" etc. in the description and claims of the disclosure and the accompanying drawings are used to distinguish different objects, and are not used to describe a specific order. Furthermore, the terms "including" and "having" and any variations thereof are intended to convey non-exclusive inclusions.

In the embodiments of the disclosure, the "indication" mentioned may be a direct indication, an indirect indication, or may represent that there is an association relationship. For example, A indicates B, which may represent that A directly indicates B, for example, B can be acquired by A; it may also represent that A indicates B indirectly, for example A indicates C, and B can be acquired through C; and it may also represent that there is an association relationship between A and B.

In the embodiments of the disclosure, "B corresponding to A" means that B is associated with A, and B can be determined from A. However, it should also be understood that determining B from A does not mean that B is determined from A alone, and that B may also be determined from A and/or other information.

In the embodiments of the disclosure, it should also be understood that the term "corresponding to" in the embodiments of the disclosure may represent that there is a direct correspondence or an indirect correspondence between two objects, or may further represent that there is an association relationship between the two objects, or may represent a relationship of indicating and being indicated, or configuring and being configured, etc.

In the embodiments of the disclosure, "predefined" or "pre-configured" may be realized by storing corresponding codes, tables, or other methods that can be used to indicate relevant information in advance in devices (including, for example, terminal devices and network devices), and the disclosure does not limit specific implementation methods thereof. For example, the term "predefined" may mean that it is defined in a protocol.

In the embodiments of the disclosure, the "protocol" may refer to a standard protocol in the communication field, and may include, for example, an LTE protocol, an NR protocol, and related protocols applied to future communication systems, which is not limited in the disclosure.

The term "and/or" in the embodiments of the disclosure is only an association relationship between objects, and indicates that there may be three kinds of relationships. For example, A and/or B may indicate that A exists alone, A and B exist simultaneously, and B exists alone. In addition, the character "/" in this article generally indicates that the related objects before and after this character are in an "or" relationship.

In various embodiments of the disclosure, the sequence numbers of the above-described processes do not mean a sequence of execution, and the sequence of execution of each process should be determined by its function and internal logic, and the sequence numbers should not constitute any limitation on the implementation process of the embodiments of the disclosure.

It should be understood that the systems, apparatuses and methods disclosed in various embodiments of the disclosure may be implemented in other ways. For example, the device embodiments described above are merely schematic. For example, the division of units is only a division in terms of logical functions, and there may be other division methods in actual implementations. For example, multiple units or components may be combined or integrated into another system, or some features may be ignored or not implemented. In addition, the coupling or direct coupling or communication connection between each other shown or discussed herein may be an indirect coupling, or a communication connection through some interfaces, devices or units, and the coupling or communication connection may be electrical, mechanical or in other forms.

The units described as separate units may or may not be physically separate, and the units displayed as units may or may not be physical units. That is to say, they may be located in one place or may be distributed over multiple network units. Some or all of the units may be selected according to actual needs to achieve the purpose of the schemes of the embodiments.

In addition, functional units in various embodiments of the disclosure may be integrated in one processing unit, may be physically present separately, or two or more units may be integrated in one unit.

The embodiments described above may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions described in accordance with embodiments of the disclosure are implemented in whole or in part. The computer may be a general-purpose computer, a special-purpose computer, a computer network, or any other programmable device. The computer instructions may be stored in a computer-readable storage medium or transmitted from one computer-readable storage medium to another computer-readable storage medium. For example, the computer instructions may be transmitted from one website site, computer, server, or data center by wired (e.g., coaxial cable, optical fiber, digital subscriber line (DSL)) or wireless (e.g., infrared, wireless, microwave, etc.) means to another website site, computer, server, or data center. The computer-readable storage medium may be any available medium that can be read by a computer, or a data storage device such as a server, a data center, or the like that is integrated from one or more available media. The available media may be magnetic media (e.g., floppy disk, hard disk, magnetic tape), optical media (e.g., Digital Video Disc (DVD)), or semiconductor media (e.g., Solid State Disk (SSD)), etc.

The foregoing describes merely specific implementations of the disclosure, but the scope of protection of the disclosure is not limited thereto. Any person skilled in the art can readily conceive of changes or substitutions within the technical scope disclosed in the disclosure, all of which fall within the scope of protection of the disclosure. Therefore, the scope of protection of the disclosure should be based on the scope of protection of the claims.

## Claims

1. A method for wireless communication, comprising:
receiving, by a first device, first information sent by a second device, the first information being used for performing performance testing and/or performance evaluation on a first model not activated for use in the first device.

2. The method of claim 1, wherein the first information comprises one or more of:
an identifier of the first model;
a first parameter for determining an activation time of the first model;
a second parameter for determining whether an inference result of the first model meets an accuracy requirement;
a third parameter for configuring a reference signal for testing the first model; and
a fourth parameter associated with a testing process of the first model.

3. The method of claim 2, wherein if the first information comprises the first parameter, the first parameter is used to configure first time delay information, and the first device activates the first model after a duration corresponding to the first time delay information has elapsed from a time when the first information is received; or,
the first parameter is used to configure information about an absolute time when the first model is activated.

4. The method of claim 2 or 3, wherein if the first information comprises the second parameter, the second parameter comprises an accuracy threshold, and if an absolute value of a result difference between the inference result of the first model and an actual result is less than or equal to the accuracy threshold, the inference result of the first model is considered to meet the accuracy requirement.

5. The method of any one of claims 2 to 4, wherein if the first information comprises the fourth parameter, the fourth parameter is used to configure running duration information of a first timer, and the first timer is associated with the inference result of the first model.

6. The method of claim 5, further comprising:
when the first timer times out, sending, by the first device, second information to the second device, wherein the second information comprises an identifier of a first model associated with the first timer that times out, and the identifier of the first model associated with the first timer indicates that a timeout occurred in the first timer associated with the corresponding model.

7. The method of claim 5 or 6, further comprising:
when the first timer times out, stopping, by the first device, running a first model associated with the first timer that times out.

8. The method of claim 5, wherein the fourth parameter is used to configure running duration information of a second timer, and the second timer is associated with a reporting operation of a testing result of the first model.

9. The method of claim 8, further comprising:
during running of the second timer, when the first timer times out, recording, by the first device, an identifier of a first model associated with the first timer that times out, and stopping running the first model associated with the first timer that times out; and/or,
when the second timer times out, sending, by the first device, second information to the second device, wherein the second information comprises an identifier of a first model associated with the first timer that times out, and the identifier of the first model associated with the first timer indicates that a timeout occurred in the first timer associated with the corresponding model.

10. The method of claim 8, further comprising:
during running of the second timer, when the first timer times out, recording, by the first device, an identifier of a first model associated with the first timer that times out and timeout number information of the first timer; and/or,
when the second timer times out, sending, by the first device, second information to the second device, wherein the second information comprises an identifier of a first model associated with a first timer that times out for at least one time, and timeout number information of the first timer.

11. The method of claim 10, wherein the recording, by the first device, an identifier of a first model associated with the first timer that times out and timeout number information of the first timer comprises:
if an information entry associated with a first timer that times out is not recorded in a cache of the first device, creating, by the first device, a new information entry, and recording, in the new information entry, the identifier of the first model associated with the first timer that times out and recording the timeout number information of the first timer as 1; and/or,
if the information entry associated with the first timer that times out is recorded in the cache of the first device, incrementing, by the first device, a value of the stop number information of the first timer recorded in a corresponding information entry by 1.

12. The method of any one of claims 5 to 11, wherein a starting condition of the first timer comprises that the inference result of the first model does not meet the accuracy requirement; and/or
a stopping condition of the first timer comprises that the inference result of the first model meets the accuracy requirement.

13. The method of any one of claims 5 to 11, wherein the starting condition of the first timer comprises that M consecutive inference results of the first model do not meet the accuracy requirement, wherein M is a positive integer greater than or equal to 1; and/or
the stopping condition of the first timer comprises that N consecutive inference results of the first model meet the accuracy requirement, wherein N is a positive integer greater than or equal to 1.

14. The method of any one of claims 2 to 4, wherein the fourth parameter is used to configure running duration information of a second timer, and the second timer is associated with a reporting operation of a testing result of the first model.

15. The method of claim 14, further comprising:
when the second timer times out, sending, by the first device, second information to the second device, wherein the second information comprises model testing results recorded during running of the second timer, and models corresponding to the model testing results recorded during running of the second timer comprise the first model.

16. The method of any one of claims 2 to 4, wherein if the first information comprises the fourth parameter, the fourth parameter is used to configure a threshold for a target number of inferences for testing the first model.

17. The method of claim 16, further comprising:
when a number of inferences for testing the first model reaches the threshold for the target number of inferences, sending, by the first device, second information to the second device, the second information comprising a testing result of testing the first model.

18. The method of claim 16, wherein the fourth parameter is used to configure a duration of a second timer, and the second timer is associated with a reporting operation of a testing result of the first model.

19. The method of claim 18, further comprising:
during running of the second timer, when a number of inferences for testing the first model reaches the threshold for the target number of inferences, stopping, by the first device, running the first model for which the number of inferences reaches the threshold for the target number of inferences; and/or,
when the second timer times out, sending, by the first device, second information to the second device, wherein the second information comprises model testing results recorded during running of the second timer, and models corresponding to the model testing results recorded during running of the second timer comprise the first model.

20. The method of any one of claims 9 to 11, 15 and 19, wherein the second information comprises one or more of:
one or more model inference results of the first model during running of the second timer;
actual results associated with the one or more model inference results of the first model during running of the second timer;
a number of inferences that meet the accuracy requirement among the one or more model inference results of the first model during running of the second timer;
a number of inferences that do not meet the accuracy requirements among the one or more model inference results of the first model during running of the second timer;
proportion information or ratio information between the number of inferences that meet the accuracy requirement among the one or more model inference results of the first model during running of the second timer and a total number of model inferences of the first model during running of the second timer; and
proportion information or ratio information between the number of inferences that do not meet the accuracy requirement among the one or more model inference results of the first model during running of the second timer and the total number of model inferences of the first model during running of the second timer.

21. The method of any one of claims 8 to 11, 14 to 15 and 18 to 20, wherein the second timer is associated with one or more first models, and the method further comprises:
when the second timer times out, stopping, by the first device, running the one or more first models associated with the second timer.

22. The method of any one of claims 8 to 11, 14 to 15 and 18 to 21, wherein a starting time of the second timer is determined based on a time when the first device receives the first information, or the starting time of the second timer is determined based on a time when the first device activates the first model.

23. The method of any one of claims 1 to 22, further comprising:
when a first condition is met, performing, by the first device, a first operation comprising one or more of:
stopping running one or more first models that are being tested in the first device;
stopping a timer running in the first device and related to testing of the model;
deleting a configuration comprised in the first information that is stored; and
clearing record information recorded in a cache of the first device and associated with a testing process of the first model.

24. The method of claim 23, wherein the first condition comprises one or more of:
the first device triggers a connection re-establishment;
the first device triggers a radio link failure;
the first device triggers a beam failure;
the first device receives synchronization reconfiguration information;
the first device performs a handover;
the first device receives a connection release message; and
the first device receives a first instruction sent by the second device, the first instruction instructing the first device to stop testing the first model.

25. The method of any one of claims 1 to 24, further comprising:
sending, by the first device, first suggestion information to the second device, wherein the first suggestion information comprises an identifier of a model that the first device expects to pause testing or the first suggestion information is used to indicate to the second device that the first device expects to pause testing all models.

26. The method of any one of claims 1 to 25, further comprising:
sending, by the first device, first capability information to the second device, wherein the first capability information is used to indicate one or more of:
whether the first device supports a model testing function;
one or more identifiers of models for which the first device supports the model testing function;
one or more identifiers of models for which the first device does not support the model testing function;
a number of models for which the first device supports simultaneous model testing; and
whether the first device supports reporting first suggestion information, wherein the first suggestion information indicates a model that the first device expects to pause testing, or the first suggestion information is used to indicate that the first device expects to pause testing all models.

27. A method for wireless communication, comprising:
sending, by a second device, first information to a first device, the first information being used for performing performance testing and/or performance evaluation on a first model not activated for use by the first device.

28. The method of claim 27, wherein the first information comprises one or more of:
an identifier of the first model;
a first parameter for determining an activation time of the first model;
a second parameter for determining whether an inference result of the first model meets an accuracy requirement;
a third parameter for configuring a reference signal for testing the first model; and
a fourth parameter associated with an inference result of the first model.

29. The method of claim 28, wherein if the first information comprises the first parameter, the first parameter is used to configure first time delay information, and the first device activates the first model after a duration corresponding to the first time delay information has elapsed from a time when the first information is received; or,
the first parameter is used to configure information about an absolute time when the first model is activated.

30. The method of claim 28 or 29, wherein if the first information comprises the second parameter, the second parameter comprises an accuracy threshold, and if an absolute value of a result difference between the inference result of the first model and an actual result is less than or equal to the accuracy threshold, the inference result of the first model is considered to meet the accuracy requirement.

31. The method of any one of claims 28 to 30, wherein if the first information comprises the fourth parameter, the fourth parameter is used to configure running duration information of a first timer, and the first timer is associated with the inference result of the first model.

32. The method of claim 31, further comprising:
receiving, by the second device, second information sent by the first device, wherein the second information comprises an identifier of a first model associated with a first timer that times out, and the identifier of the first model associated with the first timer indicates that a timeout occurred in the first timer associated with the corresponding model.

33. The method of claim 31, wherein the fourth parameter is used to configure running duration information of a second timer, and the second timer is associated with a reporting operation of a testing result of the first model.

34. The method of claim 33, further comprising:
receiving, by the second device, second information sent by the first device, wherein the second information comprises an identifier of a first model associated with a first timer that times out, and the identifier of the first model associated with the first timer indicates that a timeout occurred in the first timer associated with the corresponding model, information comprised in the second information being recorded during running of the second timer.

35. The method of claim 33, further comprising:
receiving, by the second device, second information sent by the first device, wherein the second information comprises an identifier of a first model associated with a first timer that times out for at least one time and timeout number information of the first timer, information comprised in the second information being recorded during running of the second timer.

36. The method of any one of claims 28 to 30, wherein the fourth parameter is used to configure running duration information of a second timer, and the second timer is associated with a reporting operation of a testing result of the first model.

37. The method of claim 36, further comprising:
receiving, by the second device, second information sent by the first device, wherein the second information comprises model testing results recorded during running of the second timer, and models corresponding to the model testing results recorded during running of the second timer comprise the first model.

38. The method of any one of claims 28 to 30, wherein if the first information comprises the fourth parameter, the fourth parameter is used to configure a threshold for a target number of inferences for testing the first model.

39. The method of claim 38, further comprising:
receiving, by the second device, second information sent by the first device, the second information comprising a testing result of testing the first model.

40. The method of claim 38, wherein the fourth parameter is used to configure a duration of a second timer, and the second timer is associated with a reporting operation of a testing result of the first model.

41. The method of claim 40, further comprising:
receiving, by the second device, second information sent by the first device, wherein the second information comprises model testing results recorded during running of the second timer, and models corresponding to the model testing results recorded during running of the second timer comprise the first model.

42. The method of any one of claims 34 to 35, 37 and 41, wherein the second information comprises one or more of:
one or more model inference results of the first model during running of the second timer;
actual results associated with the one or more model inference results of the first model during running of the second timer;
a number of inferences that meet the accuracy requirement among the one or more model inference results of the first model during running of the second timer;
a number of inferences that do not meet the accuracy requirements among the one or more model inference results of the first model during running of the second timer;
proportion information or ratio information between the number of inferences that meet the accuracy requirement among the one or more model inference results of the first model during running of the second timer and a total number of model inferences of the first model during running of the second timer; and
proportion information or ratio information between the number of inferences that do not meet the accuracy requirement among the one or more model inference results of the first model during running of the second timer and the total number of model inferences of the first model during running of the second timer.

43. The method of any one of claims 27 to 42, further comprising:
receiving, by the second device, first suggestion information sent by the first device, wherein the first suggestion information comprises an identifier of a model that the first device expects to pause testing or the first suggestion information is used to indicate to the second device that the first device expects to pause testing all models.

44. The method of any one of claims 27 to 43, further comprising:
receiving, by the second device, first capability information sent by the first device, wherein the first capability information is used to indicate one or more of:
whether the first device supports a model testing function;
one or more identifiers of models for which the first device supports the model testing function;
one or more identifiers of models for which the first device does not support the model testing function;
a number of models for which the first device supports simultaneous model testing; and
whether the first device supports reporting first suggestion information, wherein the first suggestion information indicates a model that the first device expects to pause testing, or the first suggestion information is used to indicate that the first device expects to pause testing all models.

45. A communication device, which is a first device, comprising:
a receiving unit, configured to receive first information sent by a second device, the first information being used for performing performance testing and/or performance evaluation on a first model not activated for use in the first device.

46. The communication device of claim 45, wherein the first information comprises one or more of:
an identifier of the first model;
a first parameter for determining an activation time of the first model;
a second parameter for determining whether an inference result of the first model meets an accuracy requirement;
a third parameter for configuring a reference signal for testing the first model; and
a fourth parameter associated with a testing process of the first model.

47. The communication device of claim 46, wherein if the first information comprises the first parameter, the first parameter is used to configure first time delay information, and the first device activates the first model after a duration corresponding to the first time delay information has elapsed from a time when the first information is received; or,
the first parameter is used to configure information about an absolute time when the first model is activated.

48. The communication device of claim 46 or 47, wherein if the first information comprises the second parameter, the second parameter comprises an accuracy threshold, and if an absolute value of a result difference between the inference result of the first model and an actual result is less than or equal to the accuracy threshold, the inference result of the first model is considered to meet the accuracy requirement.

49. The communication device of any one of claims 46 to 48, wherein if the first information comprises the fourth parameter, the fourth parameter is used to configure running duration information of a first timer, and the first timer is associated with the inference result of the first model.

50. The communication device of claim 49, further comprising:
a first sending unit, configured to, when the first timer times out, send second information to the second device, wherein the second information comprises an identifier of a first model associated with the first timer that times out, and the identifier of the first model associated with the first timer indicates that a timeout occurred in the first timer associated with the corresponding model.

51. The communication device of claim 49 or 50, further comprising:
a first processing unit, configured to, when the first timer times out, stop running a first model associated with the first timer that times out.

52. The communication device of claim 49, wherein the fourth parameter is used to configure running duration information of a second timer, and the second timer is associated with a reporting operation of a testing result of the first model.

53. The communication device of claim 52, further comprising:
a second processing unit, configured to, during running of the second timer, when the first timer times out, record an identifier of a first model associated with the first timer that times out, and stop running the first model associated with the first timer that times out; and/or,
a second sending unit, configured to, when the second timer times out, send second information to the second device, wherein the second information comprises an identifier of a first model associated with the first timer that times out, and the identifier of the first model associated with the first timer indicates that a timeout occurred in the first timer associated with the corresponding model.

54. The communication device of claim 52, further comprising:
a third processing unit, configured to, during running of the second timer, when the first timer times out, record an identifier of a first model associated with the first timer that times out and timeout number information of the first timer; and/or,
a third sending unit, configured to, when the second timer times out, send second information to the second device, wherein the second information comprises an identifier of a first model associated with a first timer that times out for at least one time, and timeout number information of the first timer.

55. The communication device of claim 54, wherein
if an information entry associated with a first timer that times out is not recorded in a cache of the first device, the third processing unit is configured to create a new information entry, and record, in the new information entry, the identifier of the first model associated with the first timer that times out and record the timeout number information of the first timer as 1; and/or,
if the information entry associated with the first timer that times out is recorded in the cache of the first device, the third processing unit is configured to increment a value of the stop number information of the first timer recorded in a corresponding information entry by 1.

56. The communication device of any one of claims 49 to 55, wherein a starting condition of the first timer comprises that the inference result of the first model does not meet the accuracy requirement; and/or
a stopping condition of the first timer comprises that the inference result of the first model meets the accuracy requirement.

57. The communication device of any one of claims 49 to 55, wherein the starting condition of the first timer comprises that M consecutive inference results of the first model do not meet the accuracy requirement, wherein M is a positive integer greater than or equal to 1; and/or,
the stopping condition of the first timer comprises that N consecutive inference results of the first model meet the accuracy requirement, wherein N is a positive integer greater than or equal to 1.

58. The communication device of any one of claims 46 to 48, wherein the fourth parameter is used to configure running duration information of a second timer, and the second timer is associated with a reporting operation of a testing result of the first model.

59. The communication device of claim 58, further comprising:
a fourth sending unit, configured to, when the second timer times out, send second information to the second device, wherein the second information comprises model testing results recorded during running of the second timer, and models corresponding to the model testing results recorded during running of the second timer comprise the first model.

60. The communication device of any one of claims 46 to 48, wherein if the first information comprises the fourth parameter, the fourth parameter is used to configure a threshold for a target number of inferences for testing the first model.

61. The communication device of claim 60, further comprising:
a fifth sending unit, configured to, when a number of inferences for testing the first model reaches the threshold for the target number of inferences, send second information to the second device, the second information comprising a testing result of testing the first model.

62. The communication device of claim 60, wherein the fourth parameter is used to configure a duration of a second timer, and the second timer is associated with a reporting operation of a testing result of the first model.

63. The communication device of claim 62, further comprising:
a fourth processing unit, configured to, during running of the second timer, when a number of inferences for testing the first model reaches the threshold for the target number of inferences, stop running the first model for which the number of inferences reaches the threshold for the target number of inferences; and/or,
a sixth sending unit, configured to, when the second timer times out, send second information to the second device, wherein the second information comprises model testing results recorded during running of the second timer, and models corresponding to the model testing results recorded during running of the second timer comprise the first model.

64. The communication device of any one of claims 53 to 55, 59 and 63, wherein the second information comprises one or more of:
one or more model inference results of the first model during running of the second timer;
actual results associated with the one or more model inference results of the first model during running of the second timer;
a number of inferences that meet the accuracy requirement among the one or more model inference results of the first model during running of the second timer;
a number of inferences that do not meet the accuracy requirements among the one or more model inference results of the first model during running of the second timer;
proportion information or ratio information between the number of inferences that meet the accuracy requirement among the one or more model inference results of the first model during running of the second timer and a total number of model inferences of the first model during running of the second timer; and
proportion information or ratio information between the number of inferences that do not meet the accuracy requirement among the one or more model inference results of the first model during running of the second timer and the total number of model inferences of the first model during running of the second timer.

65. The communication device of any one of claims 52 to 55, 58 to 59 and 62 to 64, wherein the second timer is associated with one or more first models, and the communication device further comprises:
a fifth processing unit, configured to, when the second timer times out, stop running the one or more first models associated with the second timer.

66. The communication device of any one of claims 52 to 55, 58 to 59 and 62 to 65, wherein a starting time of the second timer is determined based on a time when the first device receives the first information, or the starting time of the second timer is determined based on a time when the first device activates the first model.

67. The communication device of any one of claims 45 to 66, further comprising:
a sixth processing unit, configured to, when a first condition is met, perform a first operation comprising one or more of:
stopping running one or more first models that are being tested in the first device;
stopping a timer running in the first device and related to testing of the model;
deleting a configuration comprised in the first information that is stored; and
clearing record information recorded in a cache of the first device and associated with a testing process of the first model.

68. The communication device of claim 67, wherein the first condition comprises one or more of:
the first device triggers a connection re-establishment;
the first device triggers a radio link failure;
the first device triggers a beam failure;
the first device receives synchronization reconfiguration information;
the first device performs a handover;
the first device receives a connection release message; and
the first device receives a first instruction sent by the second device, the first instruction instructing the first device to stop testing the first model.

69. The communication device of any one of claims 45 to 68, further comprising:
a seventh sending unit, configured to send first suggestion information to the second device, wherein the first suggestion information comprises an identifier of a model that the first device expects to pause testing or the first suggestion information is used to indicate to the second device that the first device expects to pause testing all models.

70. The communication device of any one of claims 45 to 69, further comprising:
an eighth sending unit, configured to send first capability information to the second device, wherein the first capability information is used to indicate one or more of:
whether the first device supports a model testing function;
one or more identifiers of models for which the first device supports the model testing function;
one or more identifiers of models for which the first device does not support the model testing function;
a number of models for which the first device supports simultaneous model testing; and
whether the first device supports reporting first suggestion information, wherein the first suggestion information indicates a model that the first device expects to pause testing, or the first suggestion information is used to indicate that the first device expects to pause testing all models.

71. A communication device, which is a second device, comprising:
a sending unit, configured to send first information to a first device, the first information being used for performing performance testing and/or performance evaluation on a first model not activated for use by the first device.

72. The communication device of claim 71, wherein the first information comprises one or more of:
an identifier of the first model;
a first parameter for determining an activation time of the first model;
a second parameter for determining whether an inference result of the first model meets an accuracy requirement;
a third parameter for configuring a reference signal for testing the first model; and
a fourth parameter associated with an inference result of the first model.

73. The communication device of claim 72, wherein if the first information comprises the first parameter, the first parameter is used to configure first time delay information, and the first device activates the first model after a duration corresponding to the first time delay information has elapsed from a time when the first information is received; or,
the first parameter is used to configure information about an absolute time when the first model is activated.

74. The communication device of claim 72 or 73, wherein if the first information comprises the second parameter, the second parameter comprises an accuracy threshold, and if an absolute value of a result difference between the inference result of the first model and an actual result is less than or equal to the accuracy threshold, the inference result of the first model is considered to meet the accuracy requirement.

75. The communication device of any one of claims 72 to 74, wherein if the first information comprises the fourth parameter, the fourth parameter is used to configure running duration information of a first timer, and the first timer is associated with the inference result of the first model.

76. The communication device of claim 75, further comprising:
a first receiving unit, configured to receive second information sent by the first device, wherein the second information comprises an identifier of a first model associated with a first timer that times out, and the identifier of the first model associated with the first timer indicates that a timeout occurred in the first timer associated with the corresponding model.

77. The communication device of claim 75, wherein the fourth parameter is used to configure running duration information of a second timer, and the second timer is associated with a reporting operation of a testing result of the first model.

78. The communication device of claim 77, further comprising:
a second receiving unit, configured to receive second information sent by the first device, wherein the second information comprises an identifier of a first model associated with a first timer that times out, and the identifier of the first model associated with the first timer indicates that a timeout occurred in the first timer associated with the corresponding model, information comprised in the second information being recorded during running of the second timer.

79. The communication device of claim 77, further comprising:
a third receiving unit, configured to receive second information sent by the first device, wherein the second information comprises an identifier of a first model associated with a first timer that times out for at least one time and timeout number information of the first timer, information comprised in the second information being recorded during running of the second timer.

80. The communication device of any one of claims 72 to 74, wherein the fourth parameter is used to configure running duration information of a second timer, and the second timer is associated with a reporting operation of a testing result of the first model.

81. The communication device of claim 80, further comprising:
a fourth receiving unit, configured to receive second information sent by the first device, wherein the second information comprises model testing results recorded during running of the second timer, and models corresponding to the model testing results recorded during running of the second timer comprise the first model.

82. The communication device of any one of claims 72 to 74, wherein if the first information comprises the fourth parameter, the fourth parameter is used to configure a threshold for a target number of inferences for testing the first model.

83. The communication device of claim 82, further comprising:
a fifth receiving unit, configured to receive second information sent by the first device, the second information comprising a testing result of testing the first model.

84. The communication device of claim 82, wherein the fourth parameter is used to configure a duration of a second timer, and the second timer is associated with a reporting operation of a testing result of the first model.

85. The communication device of claim 84, further comprising:
a sixth receiving unit, configured to receive second information sent by the first device, wherein the second information comprises model testing results recorded during running of the second timer, and models corresponding to the model testing results recorded during running of the second timer comprise the first model.

86. The communication device of any one of claims 78 to 79, 81 and 85, wherein the second information comprises one or more of:
one or more model inference results of the first model during running of the second timer;
actual results associated with the one or more model inference results of the first model during running of the second timer;
a number of inferences that meet the accuracy requirement among the one or more model inference results of the first model during running of the second timer;
a number of inferences that do not meet the accuracy requirements among the one or more model inference results of the first model during running of the second timer;
proportion information or ratio information between the number of inferences that meet the accuracy requirement among the one or more model inference results of the first model during running of the second timer and a total number of model inferences of the first model during running of the second timer; and
proportion information or ratio information between the number of inferences that do not meet the accuracy requirement among the one or more model inference results of the first model during running of the second timer and the total number of model inferences of the first model during running of the second timer.

87. The communication device of any one of claims 71 to 86, further comprising:
a seventh receiving unit, configured to receive first suggestion information sent by the first device, wherein the first suggestion information comprises an identifier of a model that the first device expects to pause testing or the first suggestion information is used to indicate to the second device that the first device expects to pause testing all models.

88. The communication device of any one of claims 71 to 87, further comprising:
an eighth receiving unit, configured to receive first capability information sent by the first device, wherein the first capability information is used to indicate one or more of:
whether the first device supports a model testing function;
one or more identifiers of models for which the first device supports the model testing function;
one or more identifiers of models for which the first device does not support the model testing function;
a number of models for which the first device supports simultaneous model testing; and
whether the first device supports reporting first suggestion information, wherein the first suggestion information indicates a model that the first device expects to pause testing, or the first suggestion information is used to indicate that the first device expects to pause testing all models.

89. A communication device, comprising a transceiver, a memory configured to store a program, and a processor configured to invoke the program in the memory and control the transceiver to receive or transmit signals to cause the communication device to perform the method of any one of claims 1 to 44.

90. An apparatus, comprising a processor configured to invoke a program from a memory to cause the apparatus to perform the method of any one of claims 1 to 44.

91. A chip, comprising a processor configured to invoke a program from a memory to cause a device on which the chip is mounted to perform the method of any one of claims 1 to 44.

92. A computer-readable storage medium having stored thereon a program that causes a computer to perform the method of any one of claims 1 to 44.

93. A computer program product, comprising a program that causes a computer to perform the method of any one of claims 1 to 44.

94. A computer program that causes a computer to perform the method of any one of claims 1 to 44.
